# EUROPÄISCHE PATENTANMELDUNG

(11) **EP 0 972 810 A1**
(43) Veröffentlichungstag der Anmeldung: **19.01.2000**
(21) Anmeldenummer: 99113487.5
(22) Anmeldetag: 13.07.1999
(51) Int. Cl.: C09B 67/22, C09B 62/20, D06P 1/382

(54) **Mischungen von faserreaktiven Farbstoffen und deren Verwendung zum Färben von hydroxy- und/oder carbonamidhaltigem Material**

(30) Priorität: 17.07.1998 DE 19832220
(71) Anmelder: DyStar Textilfarben GmbH & Co. Deutschland KG, 60318 Frankfurt am Main (DE)
(72) Erfinder: Russ, Werner, Dr., 65439 Flörsheim-Wicker (DE); Ehrenberg, Stefan, Dr., 60528 Frankfurt am Main (DE)

(57) **Zusammenfassung**

Es werden Farbstoffmischungen beschrieben, die einen oder mehrere organische Farbstoffe der unterschiedlichsten Farbstoffklassen mit dem faserreaktiven 2,4-Difluor-pyrimidin-6-yl-Rest und einen oder mehrere organische Farbstoffe der unterschiedlichsten Farbstoffklassen mit dem faserreaktiven 4,6-Difluorpyrimidin-4-yl-Rest enthalten.

Die Farbstoffmischungen eignen sich sehr gut zum Färben von hydroxy- und/oder carbonamidgruppenhaltigen Materialien, insbesondere Fasermaterialien, in farbkräftigen Tönen.

## Beschreibung

Aus der deutschen Offenlegungsschrift 4 125 754 sind faserreaktive Farbstoffe bekannt, die auf hydroxy- und/oder carbonamidgruppenhaltigem Material, insbesondere Fasermaterial, Färbungen von ausreichend guter Qualität liefern.

Dennoch war es im Hinblick auf die Anforderung von Färbereien an Farbstoffprodukte erforderlich, nach weiteren Produkten zu suchen, die, wenn auch leichte, nach den heutigen ökonomischen Anforderungen jedoch entscheidende, Vorteile in der Anwendung bieten.

Es wurden nunmehr Mischungen von faserreaktiven Farbstoffen gefunden, die einen oder mehrere, wie zwei, drei oder vier, Farbstoffe der allgemeinen Formel (1A) und einen oder mehrere, wie zwei, drei oder vier, Farbstoffe der allgemeinen Formel (1B)

A - X^{A} A - X^{B} (1B) (1A)

enthalten. In diesen Formeln bedeuten:
- X^{A}: ist der 2,4-Difluor-pyrimidin-6-yl-Rest;
- X^{B}: ist der 4,6-Difluor-pyrimidin-2-yl-Rest;
- A: ist ein chromophorer Rest entsprechend einer der allgemeinen Formeln (2) bis (7) und (12) bis (14) 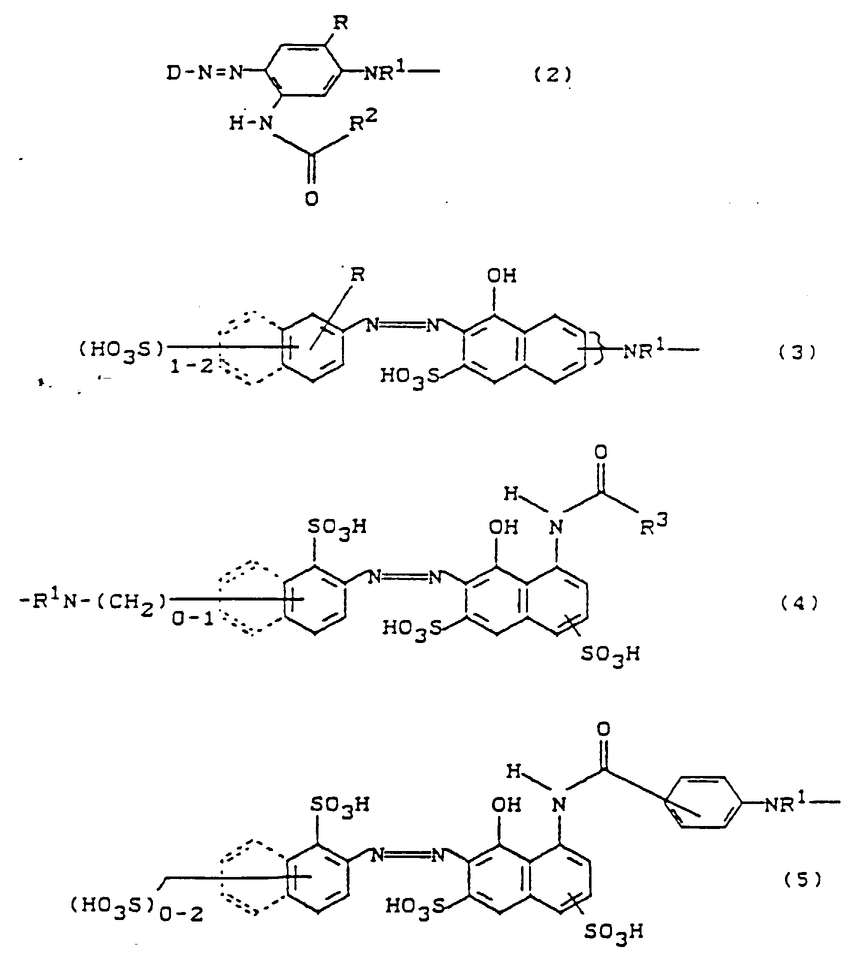 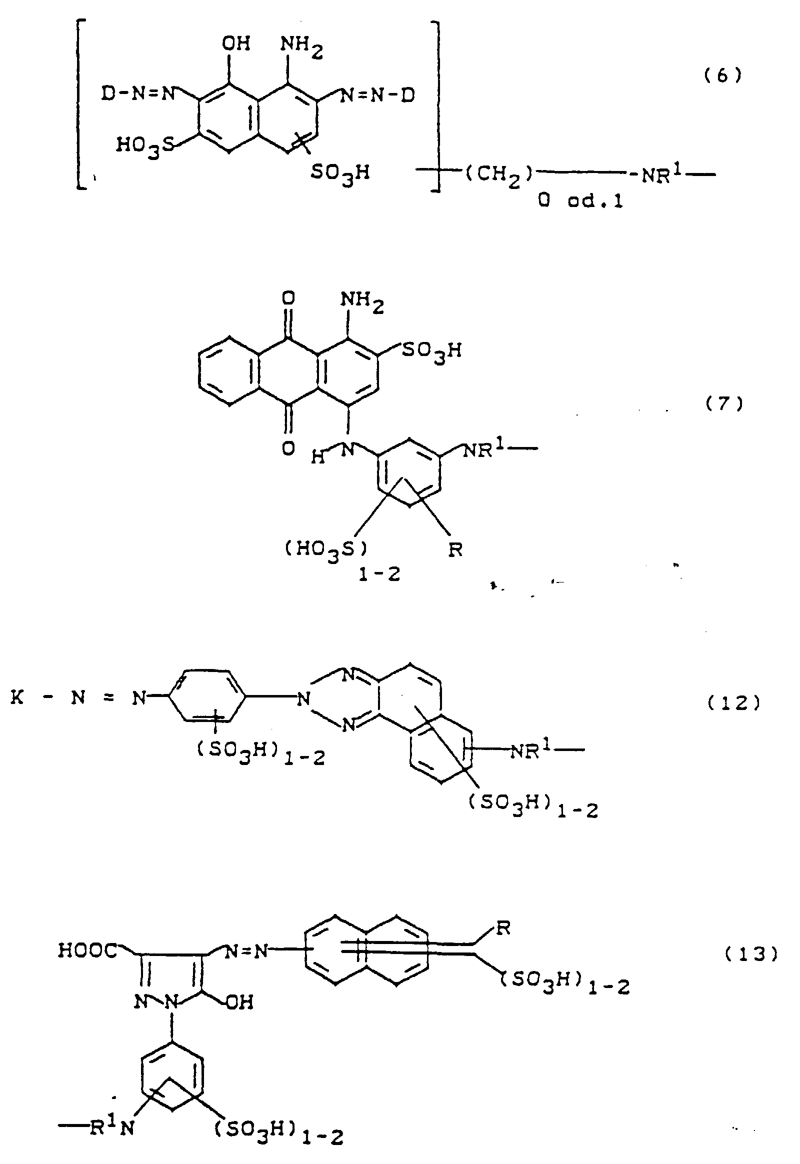 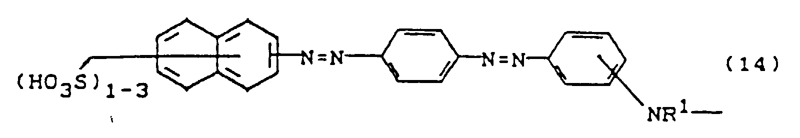
oder
der Metallkomplexe von Farbstoffen der Formeln (8)-(11) 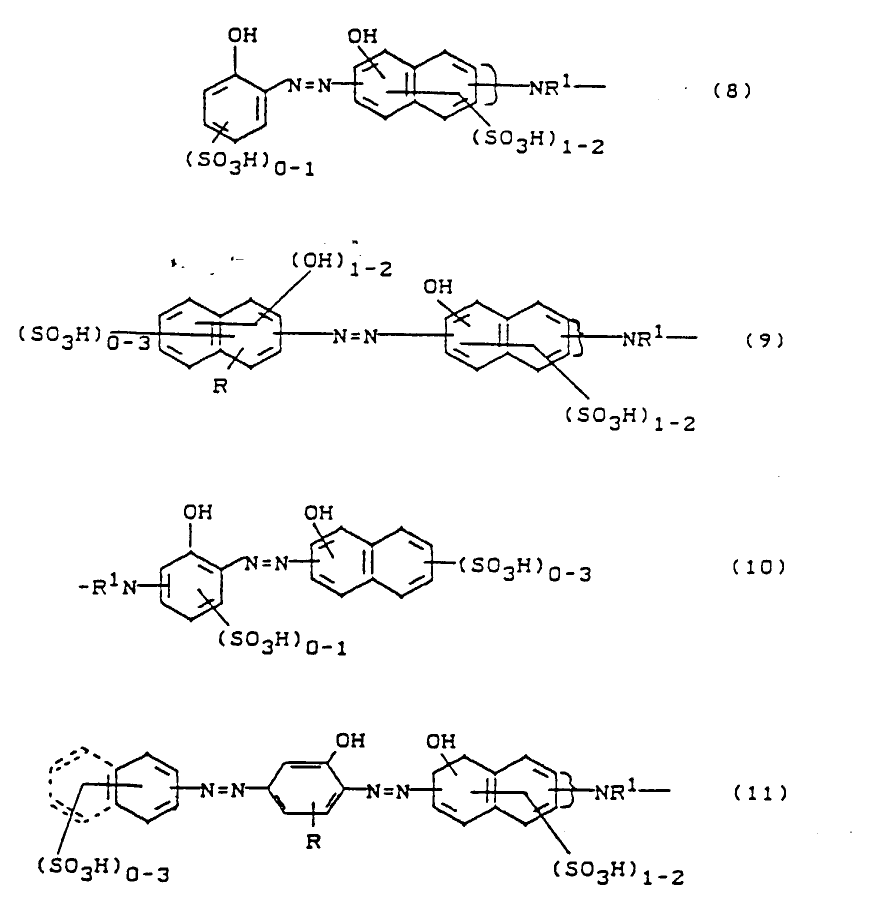 worin
die Bindung zwischen dem chromophoren Rest A und dem 4-Pyrimidinyl-Rest über eine Amino- oder Aminomethylfunktion an ein Ring-C-Atom und A erfolgt,
- R =: H, C₁-C₆-Alkylrest, C₁-C₆-Alkoxyrest,
- R¹ =: H, CH₃, C₂H₅,
- R² =: NH₂, gegebenenfalls durch OH, SO₃H, OSO₃H oder CO₂H substituierter C₁-C₄-Alkylrest, gegebenenfalls durch OH, SO₃H, OSO₃H oder CO₂H substituierter C₁-C₄-Alkoxyrest,
- R³ =: gegebenenfalls durch OH, SO₃H, OSO₃H oder CO₂H substituierter C₁-C₄-Alkylrest, gegebenenfalls durch C₁-C₄-Alkyl, Halogen oder SO₃H substituierter Phenylrest,
- D: steht für einen sulfogruppen- oder carboxygruppenhaltigen Rest einer Diazokomponente aus der Benzol-, Naphthalin- oder Hetarylreihe, der zusätzlich mit Alkyl-, Alkoxy-, Carboxy- oder Halogenresten substituiert sein kann, in Formel (6) jedoch weist einer von beiden Resten D einen, möglicherweise substituierten, 2,6-Difluor-4-pyrimidinylamino-, -methylamino- oder -ethylamino-Substituenten auf- D kann in diesem Fall sulfogruppenfrei oder sulfogruppenhaltig sein,
- K: steht für eine Kupplungskomponente, bevorzugt für Pyridone, Pyrazolone, Barbitursäure- und Citracinsäurederivate.

In den oben beschriebenen Formeln als auch in den nachfolgend angegebenen allgemeinen Formeln können die einzelnen Formelreste, auch solche mit gleicher Bezeichnung, im Rahmen ihrer Bedeutung zueinander gleiche oder voneinander verschiedene Bedeutungen besitzen. Die Formeln sind in Form der freien Säure geschrieben; in der Regel liegen die Farbstoffe jedoch als wasserlösliche Salze, wie insbesondere Alkalimetallsalze, wie Natrium-, Kalium- oder Lithiumsalze, vor. Entsprechendes gilt für andere Formelreste mit sauren Gruppen, die gleichfalls in der Salzform zu denken sind.

Sind in der erfindungsgemäßen Mischung mehrere Farbstoffe, wie zwei, drei oder vier, der allgemeinen Formel (1A) enthalten, so können sie sich in den Resten A, in den Chromophoren des Restes A oder innerhalb eines gleichen Chromophors in dem einen oder anderen Substituenten oder Rest des Chromophors unterscheiden. Gleichermaßen können sich Farbstoffe der allgemeinen Formel (1B), sofern sie in der Mischung zu zwei oder mehreren enthalten sind, zueinander in diesen chemischen Konstitutionen unterscheiden. Eine bevorzugte Ausführungsform der Erfindung sind jedoch Farbstoffmischungen, in welchen die Farbstoffchromophore des Restes A bzw. die Reste A selbst identisch sind, insbesondere auch identisch zueinander in den Farbstoffen der Formeln (1A) und (1B), und insbesondere sind solche erfindungsgemäßen Farbstoffmischungen hervorzuheben, die einen Farbstoff der allgemeinen Formel (1A) und einen Farbstoff der allgemeinen Formel (1B) enthalten, die sich lediglich in den Resten X^{A} und X^{B} unterscheiden.

In der Gesamtmischung der Farbstoffe der allgemeinen Formeln (1A) und (1B) sind der oder die Farbstoffe der allgemeinen Formel (1A) in einem Anteil von 90 bis 30 Gew.-%, bevorzugt von 85 bis 50 Gew.-%, und der oder die Farbstoffe der allgemeinen Formel (1B) in einem Anteil von 10 bis 70 Gew.-%, bevorzugt von 15 bis 50 Gew.-%, enthalten.

In einer bevorzugten Ausführungsform sind bei den Metallkomplexfarbstoffen Cu (1:1-Komplex) oder Cr und Co (1:2-Komplex) bevorzugt. Cr- und Co-Komplexe können die genannten Azoverbindungen einmal oder bevorzugt zweimal enthalten, wobei sie asymmetrisch oder mit beliebigen anderen Ligandengruppen unsymmetrisch aufgebaut sein können.

Bevorzugt sind Farbstoffmischungen mit Farbstoffen der Formeln (1A) und (1B) mit einem Rest der Formeln (2) bis (12), in welchen bedeuten:
- R: ist H, CH₃, OCH₃, OC₂H₅,
- R¹: ist H, CH₃,
- R²: ist NH₂, gegebenenfalls durch OH, SO₃H, OSO₃H oder CO₂H substituierter C₁-C₄-Alkyrest,
- R³: ist CH₃, gegebenenfalls durch C₁-C₄-Alkyl, Halogen oder SO₃H substituierter Phenylrest.

Ganz besonders bevorzugt sind:
a) Farbstoffmischungen mit Farbstoffen (1A) und (1B) mit dem Rest A gleich einem Rest der Formel (2), in welcher bedeutet:
   - R: ist H,
   - R¹: ist H, CH₃,
   - R²: ist NH₂, gegebenenfalls durch OH, SO₃H, OSO₃H oder CO₂H substituierter C₁-C₄-Alkylrest und
   - D: ist Disulfo-phenyl, 6,8-Disulfo-naphth-2-yl, 3,6,8-Trisulfo-naphth-2-yl oder 4,8-Disulfo-naphth-2-yl,
b) Farbstoffmischungen mit Farbstoffen (1A) und (1B) mit dem Rest A gleich einem Rest der Formel (3), in welcher bedeutet:
   - R: ist H, CH₃, OC₂H₅,
   - R¹: ist H, CH₃;
c) Farbstoffmischungen mit Farbstoffen (1A) und (1B) mit dem Rest A gleich einem Rest der Formel (4) oder (5), in welchen bedeuten:
   - R¹: ist H, CH₃,
   - R³: ist CH₃, gegebenenfalls durch C₁-C₄-Alkyl, Halogen oder SO₃H substituierter Phenylrest;
d) Farbstoffmischungen mit Farbstoffen (1A) und (1B) mit dem Rest A gleich einem Rest der Formel (17a) oder (17b) 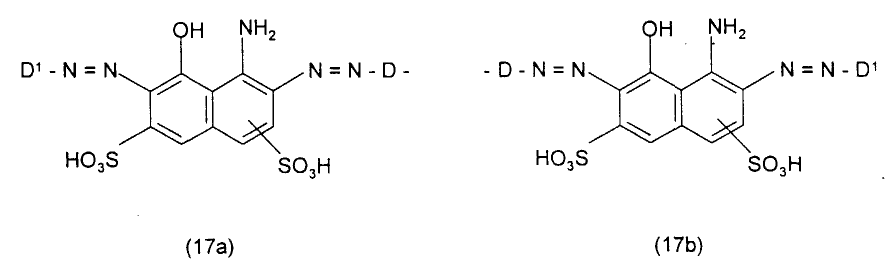 worin bedeuten:
   - D: ist ein Rest der allgemeinen Formel (a) 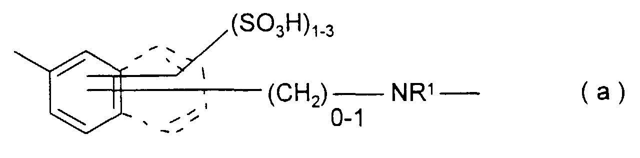 mit R¹ gleich Wasserstoff oder Methyl,
   - D¹: ist Mono-, Di- oder Trisulfo-phenyl oder Mono-, Di- oder Trisulfonaphth-2-yl;
e) Farbstoffmischungen mit Farbstoffen (1A) und (1B) mit dem Rest A gleich einem Rest der Formel (18) 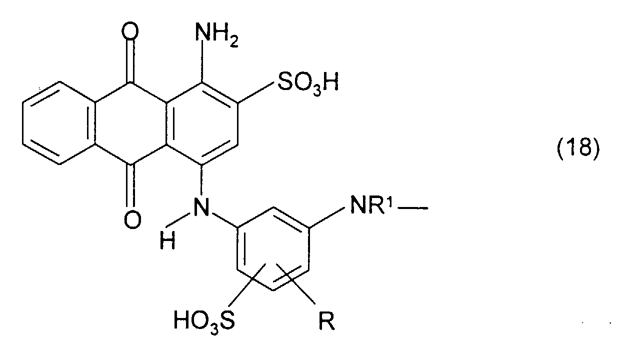 worin bedeuten:
   - R: ist H, CH₃, OCH₃,
   - R¹: ist H;
f) Farbstoffmischungen mit Farbstoffen (1A) und (1B) mit dem Rest A gleich einem Rest der Formel (8), (9), (10) oder (11), in welchen R gleich Wasserstoff ist,
g) Farbstoffmischungen mit Farbstoffen (1A) und (1B) mit dem Rest A gleich einem Rest der Formel (12), worin
   - R: H ist und
   - K: die obengenannte Bedeutung hat.

Die erfindungsgemäßen Farbstoffmischungen eignen sich hervorragend zum Färben und Bedrucken von natürlichen und synthetischen OH- und/oder amidgruppenhaltigen Materialien, insbesondere solchen aus Cellulose und Polyamiden. Sie sind besonders geeignet zum Färben von Cellulosematerialien in Auszieh- und Klotz-Kaltverweil-Verfahren sowie zum Bedrucken von Cellulosematerialien wie Baumwolle oder Zellwolle. Sie können in Abmischung mit anderen Farbstoffen für eine Trichromie verwendet werden.

Man erhält bei gutem Aufbauvermögen und hohen Fixierausbeuten Färbungen mit guten Allgemeinechtheiten, insbesondere Naßechtheiten.

Die in den erfindungsgemäßen Farbstoffmischungen enthaltenen Farbstoffe erhält man nach den in der Farbstoffchemie üblichen und dem Fachmann geläufigen Syntheseverfahren, bspw. gemäß den Angaben der DE-A-41 25 754 bzw. in analoger, dem Fachmann geläufiger Verfahrensweise. Die Farbstoffmischungen selbst lassen sich durch mechanisches Vermischen der Einzelfarbstoffe herstellen oder aber auf chemischem Wege, bspw. durch Umsetzung von für den jeweiligen Farbstoffchromophor typischen Vorprodukten, von denen mindestens eines den oder die Reste X^{A} und/oder X^{B} enthält, oder durch Umsetzung eines oder gegebenenfalls zweier oder mehrerer aminogruppenhaltigen Chromophore mit 2,4,6-Trifluorpyrimidin in an und für sich bekannter Verfahrensweise der Umsetzung von aminogruppenhaltigen Verbindungen mit halogensubstituierten Pyrimidinen.

Die Reaktivkomponente 2,4,6-Trifluorpyrimidin ist aus DE-A-2 114 158 (US-A- 40 65 446) bekannt und beispielsweise aus 2,4,6-Trichlorpyrimidin durch Fluoridaustausch mit HF oder Alkalifluoriden in aprotischen Lösungsmitteln zu erhalten.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

### Beispiel 1

23,6 g des Mononatriumsalzes der 7-Amino-naphthalin-1,3-disulfonsäure werden in einem Gemisch aus 150 ml Wasser, 30 g Eis und 20 ml konzentrierter Salzsäure in üblicher Weise bei 5 bis 10°C durch Zugabe von 17 ml einer 30 %igen wäßrigen Natriumnitritlösung diazotiert. Die erhaltene Suspension wird nun langsam innerhalb von 30 Minuten unter Einhaltung eines pH-Wertes zwischen 6,0 und 6,5 und einer Temperatur von unterhalb 10°C zu einer aus 13,5 g N-(3-Aminophenyl)-acetamid-hydrochlorid, 50 ml Wasser, 50 g Eis und etwa 30 ml einer 10 %igen wäßrigen Lithiumhydroxidlösung bestehenden Mischung gegeben und die Kupplungsreaktion unter diesen pH- und Temperaturbedingungen unter weiterem Rühren zu Ende geführt.

Anschließend erwärmt man den Ansatz auf 40°C, gibt unter Rühren 12 g 2,4,6-Trifluor-pyrimdin hinzu und führt die Umsetzung unter Einhaltung eines pH-Wertes von 5,8 bis 6,2 mittels einer Lithiumhydroxidlösung durch. Die nach erfolgter Umsetzung (die dünnschichtchromatographisch beurteilt werden kann) erhaltene Farbstofflösung wird geklärt und die erfindungsgemäße Mischung der Farbstoffe mittels 50 g Natriumchlorid ausgesalzen und isoliert.

Die erfindungsgemäße Farbstoffmischung enthält die Farbstoffe der Formeln (A) und (B) 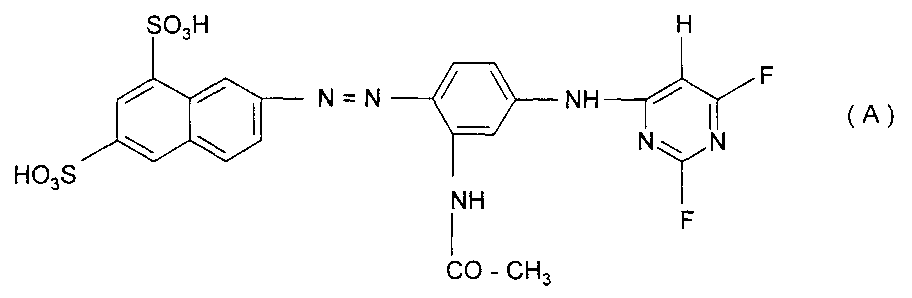 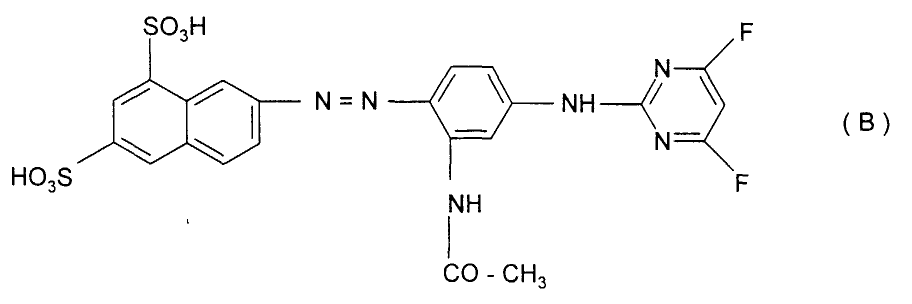 in Form ihrer Alkalimetallsalze im ungefähren molaren Verhältnis von 3,5 : 1; sie färbt beispielsweise Baumwolle nach den für faserreaktive Farbstoffe üblichen Färbe- und Druckverfahren in goldgelben, hochechten Tönen.

### Beispiele 2 bis 39

In den nachfolgenden Tabellenbeispielen sind weitere erfindungsgemäße Farbstoffmischungen mit Farbstoffen entsprechend der allgemeinen Formel (C) 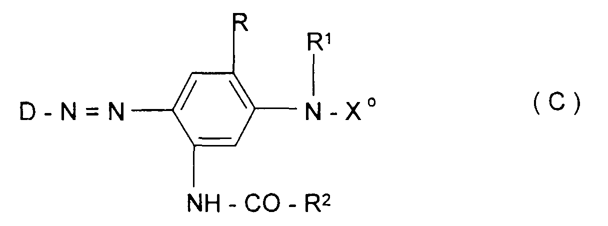 anhand der Komponenten beschrieben, wobei D der Rest der Diazokomponente ist und der Formelrest X⁰ für den einen Farbstoff die Bedeutung von X^{A} der anfangs angegebenen Bedeutung und für den anderen Farbstoff die Bedeutung von X^{B} besitzt. Sie lassen sich in einer der erfindungsgemäßen Verfahrensweise, beispielsweise analog dem Beispiel 1, herstellen und liefern auf den in der Beschreibung genannten Materialien, wie insbesondere Baumwolle, nach den für faserreaktive Farbstoffe üblichen Färbe- und Druckverfahren farbstarke goldgelbe und echte Färbungen und Drucke.

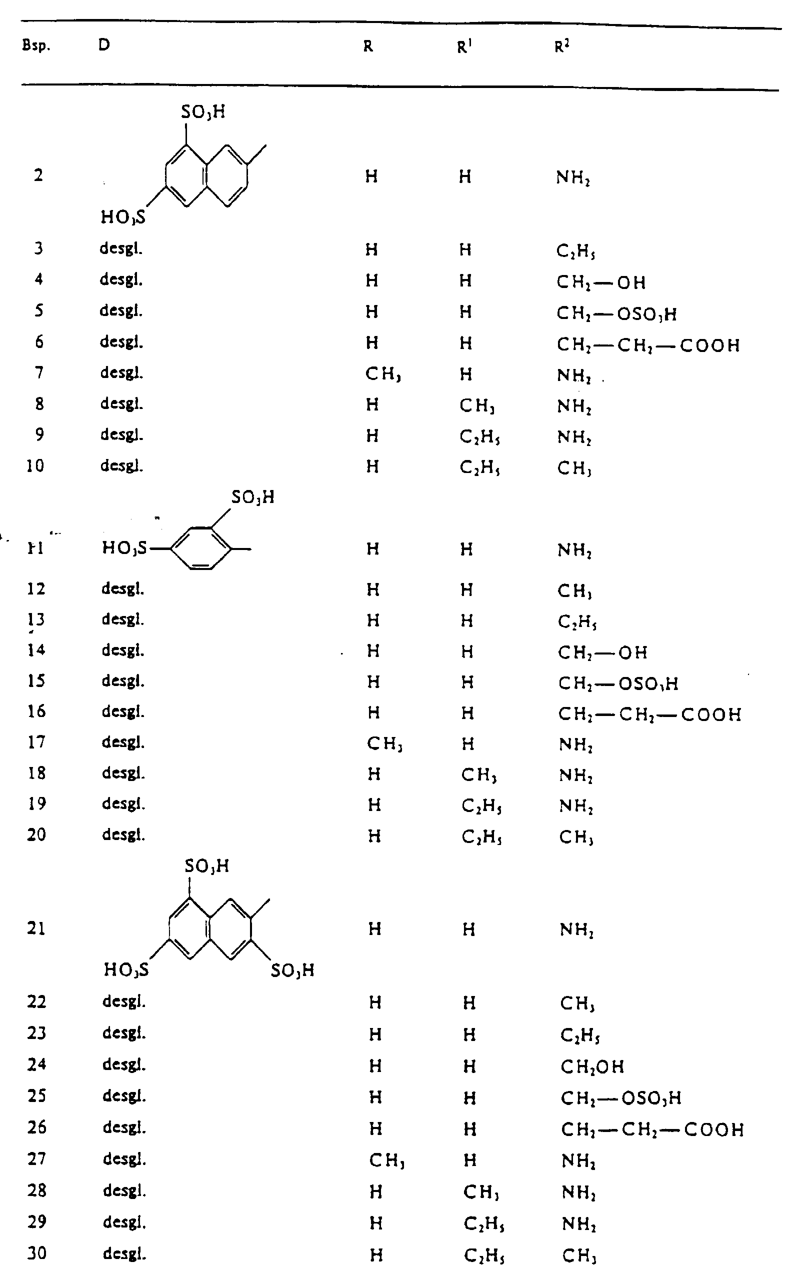

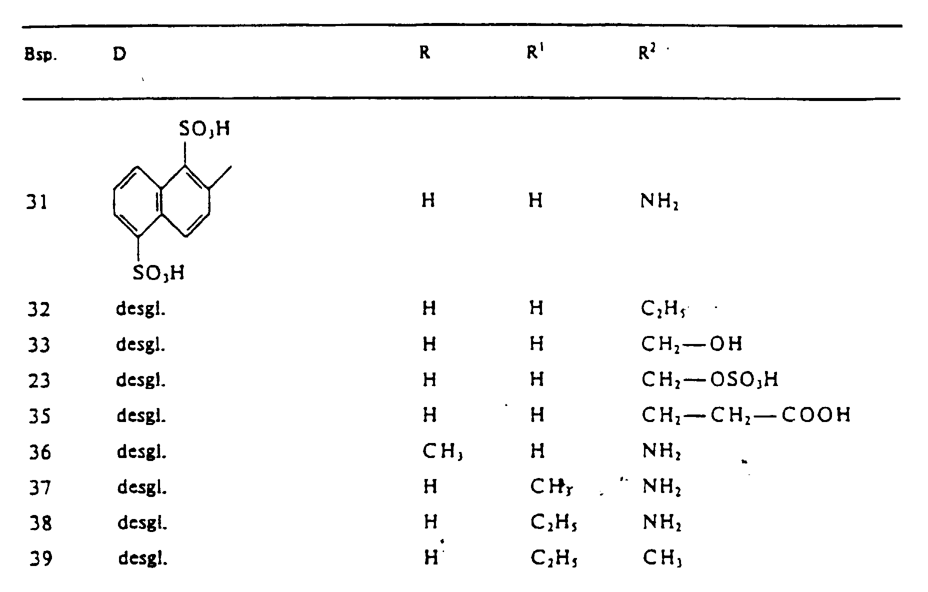

### Beispiel 40

Die neutrale Lösung des Lithiumsalzes von 10,4 g 7-Amino-4-hydroxynaphthalin-2-sulfonsäure in 150 ml Wasser wird unter gutem Rühren mit 7,6 Teilen 2,4,6-Trifluor-pyrimidin versetzt; der Ansatz wird auf 40°C erwärmt und der pH-Wert mittels einer wäßrigen Lithiumcarbonatlösung bei 6,5 gehalten. Man rührt unter den genannten Temperatur- und pH-Bedingungen noch etwa drei Stunden weiter, kühlt den Ansatz auf 10°C ab und versetzt ihn unter Einhaltung eines pH-Wertes von 6,5 mit einer auf üblichem Wege hergestellten wäßrigen Suspension des Diazoniumsalzes aus 14,1 g 2-Amino-1,5-disulfonsäure. Nach Beendigung der Kupplungsreaktion wird die erfindungsgemäße Farbstoffmischung ausgesalzen und isoliert; sie enthält die Alkalimetallsalze der Farbstoffe der Formel 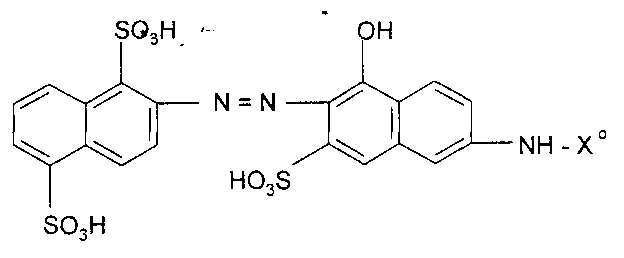 in welcher die Gruppe X⁰ in dem einen Farbstoff den Rest X^{A} bedeutet und in dem anderen Farbstoff den Rest X^{B}, wobei die beiden Farbstoffe mit X^{A} und X^{B} in der erfindungsgemäßen Mischung im molaren Verhältnis von etwa 3,4 : 1 vorliegen. Die Mischung färbt beispielsweise Baumwolle in brillanten orangen Tönen mit sehr guten Naßechtheiten.

### Beispiel 40a

Zur Herstellung einer in Beispiel 40 beschriebenen erfindungsgemäßen Farbstoffmischung kann man auch in der Weise vorgehen, daß man von der Azoverbindung 3-(1',5'-Disulfo-naphth-2'-yl)-azo-7-amino-4-hydroxy-2-sulfonaphthalin ausgeht und diese mit der äquivalenten Menge von 2,4,6-Trifluorpyrimidin bei einem pH-Wert von 6,5 bis 7,5 und einer Temperatur von etwa 40°C umsetzt. Die erfindungsgemäße Farbstoffmischung wird in üblicher Weise aus dem Reaktionsansatz isoliert und besitzt die gleichen guten Farbstoffeigenschaften wie die nach Beispiel 40 hergestellte erfindungsgemäße Farbstoffmischung.

### Beispiele 41 bis 59

In den nachfolgenden Tabellenbeispielen sind weitere erfindungsgemäße Farbstoffmischungen mit Farbstoffen entsprechend der allgemeinen Formel (D)

D - N = N - K¹ - X⁰ (D)

anhand der Komponenten beschrieben, wobei der Rest D der Rest der Diazokomponente ist, K¹ den Rest einer Kupplungskomponente bedeutet und der Formelrest X⁰ für den einen Farbstoff die Bedeutung von X^{A} und für den anderen Farbstoff die Bedeutung von X^{B} besitzt. Die erfindungsgemäßen Farbstoffmischungen lassen sich in einer der erfindungsgemäßen Verfahrensweisen, beispielsweise analog einem der obigen Ausführungsbeispiele, herstellen und liefern auf den in der Beschreibung genannten Materialien, wie insbesondere Baumwolle, nach den für faserreaktive Farbstoffe üblichen Anwendungsverfahren farbstarke Färbungen und Drucke in dem in dem jeweiligen Tabellenbeispiel angegebenen Farbton.

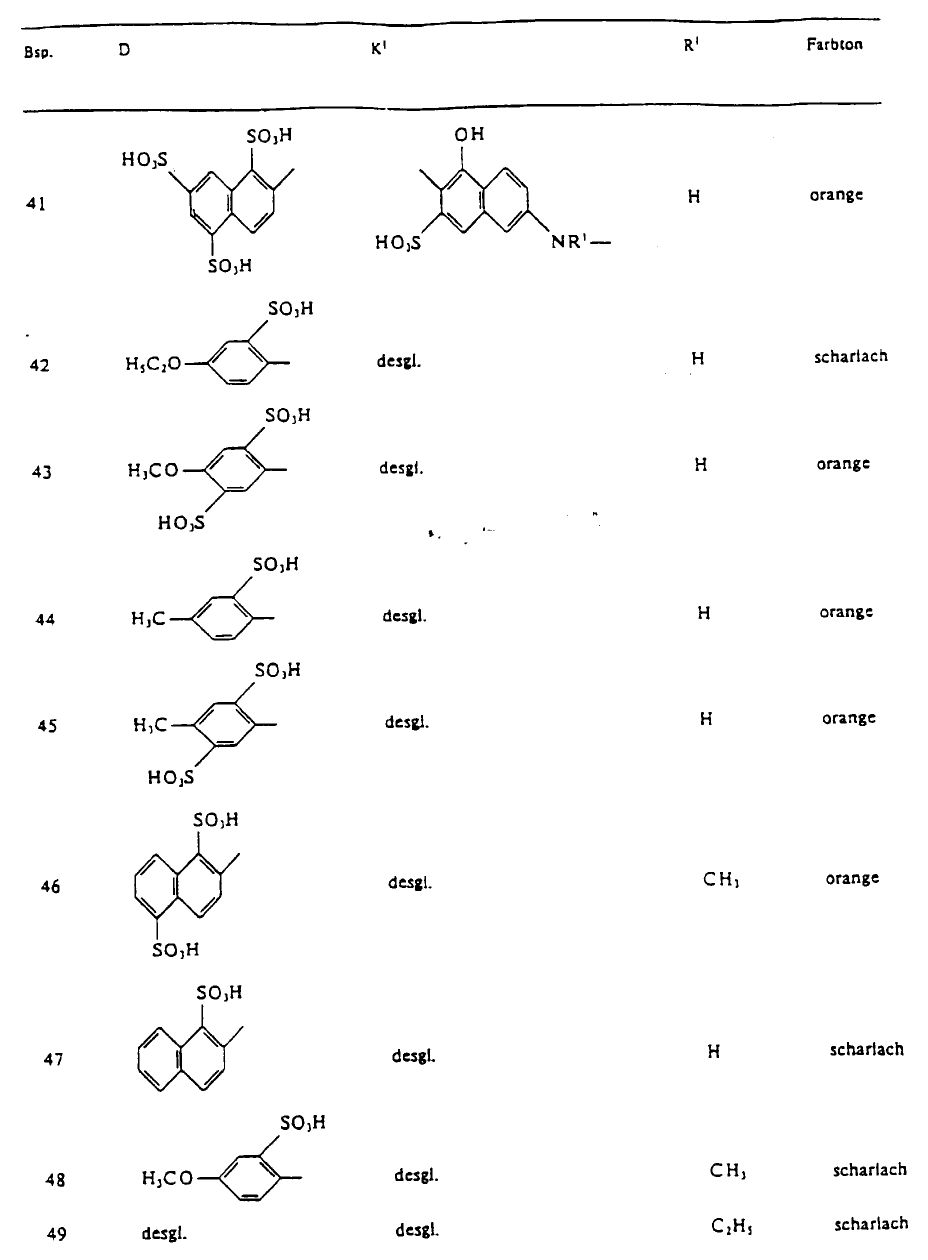

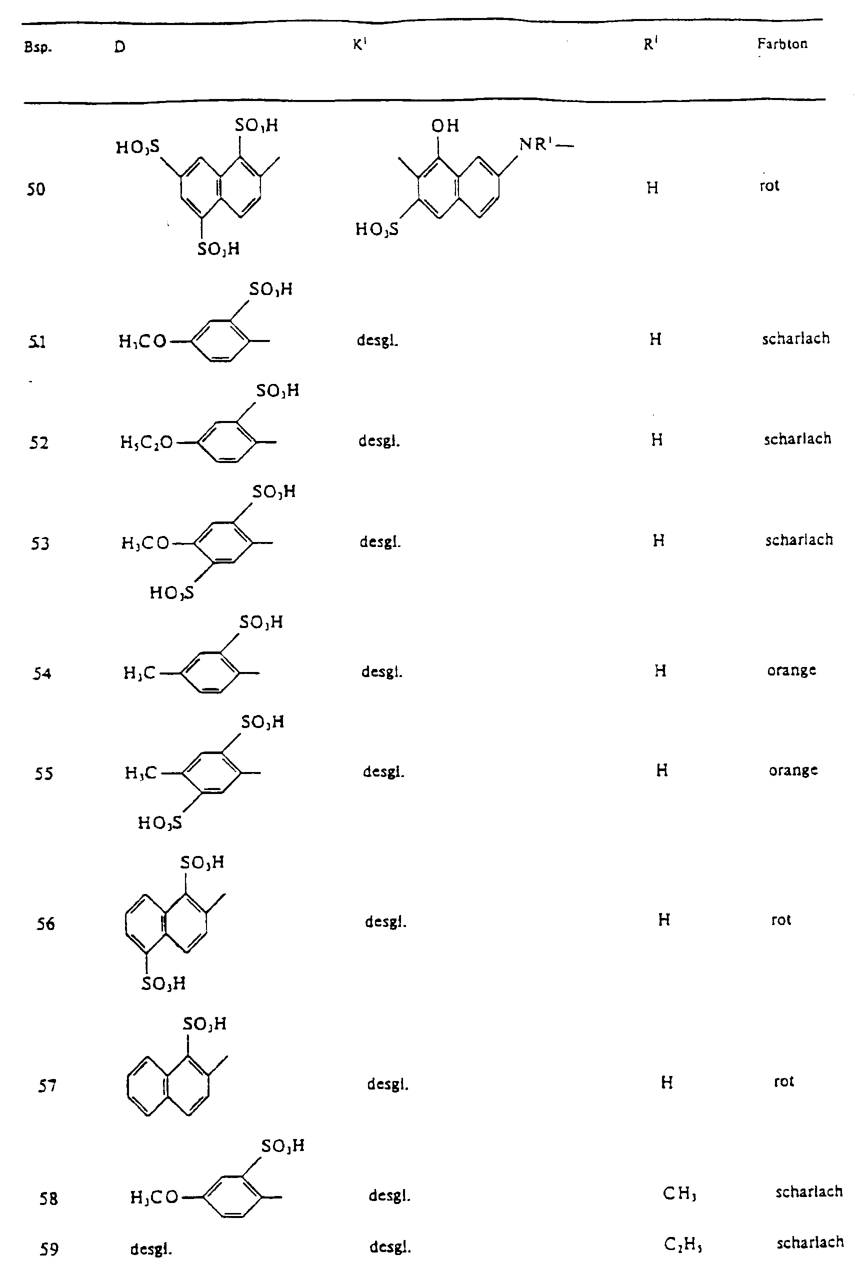

### Beispiel 60

Zu einer Lösung mit einem pH-Wert von 7 von 30,5 g des Lithiumsalzes der 1,3-Aminobenzol-6-sulfonsäure und 14 g Natriumhydrogencarbonat gibt man unter gutem Rühren bei 10°C innerhalb einer Stunde 15 ml 2,4,6-Trifluor-pyrimidin. Man rührt den Ansatz noch etwa zwei Stunden weiter, wobei man ihn langsam auf 30°C erwärmt, klärt sodann mittels Aktivkohle, kühlt den Ansatz auf 0°C ab, versetzt ihn mit 7 ml konzentrierter Salzsäure und diazotiert in üblicher Weise durch Zugabe von 9 ml einer 30 %igen wäßrigen Natriumnitritlösung. Die so erhaltene Diazoniumsalzlösung wird in eine neutrale wäßrige Lösung von 31,2 g 1-Benzoylamino-8-hydroxy-naphthalin-3,6-disulfonsäure gegeben und die Kupplungsreaktion während etwa einer Stunde bei einem pH-Wert von 7 und einer Temperatur von etwa 15°C zu Ende geführt.

Aus dem Reaktionsansatz werden die synthetisierten Farbstoffe in üblicher Weise isoliert, beispielsweise durch Aussalzen mit Natriumchlorid. Die so erhaltene erfindungsgemäße Farbstoffmischung der beiden Farbstoffe der Formel 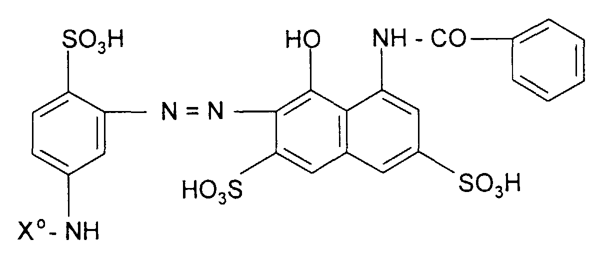 in welcher in dem einen Farbstoff der Rest X⁰ den 4,6-Difluor-pyrimidin-2-yl-Rest und in dem anderen Farbstoff den 2,4-Difluor-pyrimidin-6-yl-Rest bedeutet, die in der Mischung im molaren Verhältnis von etwa 1 : 3,4 vorliegen, zeigt sehr gute färberische Eigenschaften und färbt beispielsweise Cellulosefasermaterialien in einem klaren blaustichig roten Farbton mit guten Echtheitseigenschaften.

### Beispiel 60a

Zur Herstellung einer in Beispiel 60 beschriebenen erfindungsgemäßen Farbstoffmischung kann man auch in der Weise vorgehen, daß man von der Azoverbindung 7-(2'-Sulfo-5'-amino-phenyl)-azo-3,6-disulfo-1-benzoylamino-8-hydroxy-naphthalin ausgeht und diese mit der äquivalenten Menge von 2,4,6-Trifluorpyrimidin bei einem pH-Wert von 6 bis 7 und einer Temperatur von etwa 50°C umsetzt. Die erfindungsgemäße Farbstoffmischung wird in üblicher Weise aus dem Reaktionsansatz isoliert und besitzt die gleichen guten Farbstoffeigenschaften wie die nach Beispiel 60 hergestellte erfindungsgemäße Farbstoffmischung.

### Beispiele 61 bis 75

In den nachfolgenden Tabellenbeispielen sind weitere erfindungsgemäße Farbstoffmischungen mit Farbstoffen entsprechend der allgemeinen Formel (E)

X⁰ - D² - N = N - K (E)

anhand der Komponenten beschrieben, wobei der Rest D² der Rest der Diazokomponente ist, K den Rest einer Kupplungskomponente bedeutet und der Formelrest X⁰ für den einen Farbstoff die Bedeutung von X^{A} und für den anderen Farbstoff die Bedeutung von X^{B} besitzt. Die erfindungsgemäßen Farbstoffmischungen lassen sich in einer der erfindungsgemäßen Verfahrensweisen, beispielsweise analog einem der obigen Ausführungsbeispiele, herstellen und liefern auf den in der Beschreibung genannten Materialien, wie insbesondere Baumwolle, nach den für faserreaktive Farbstoffe üblichen Anwendungsverfahren farbstarke Färbungen und Drucke in roten bis blaustichig roten Farbtönen.

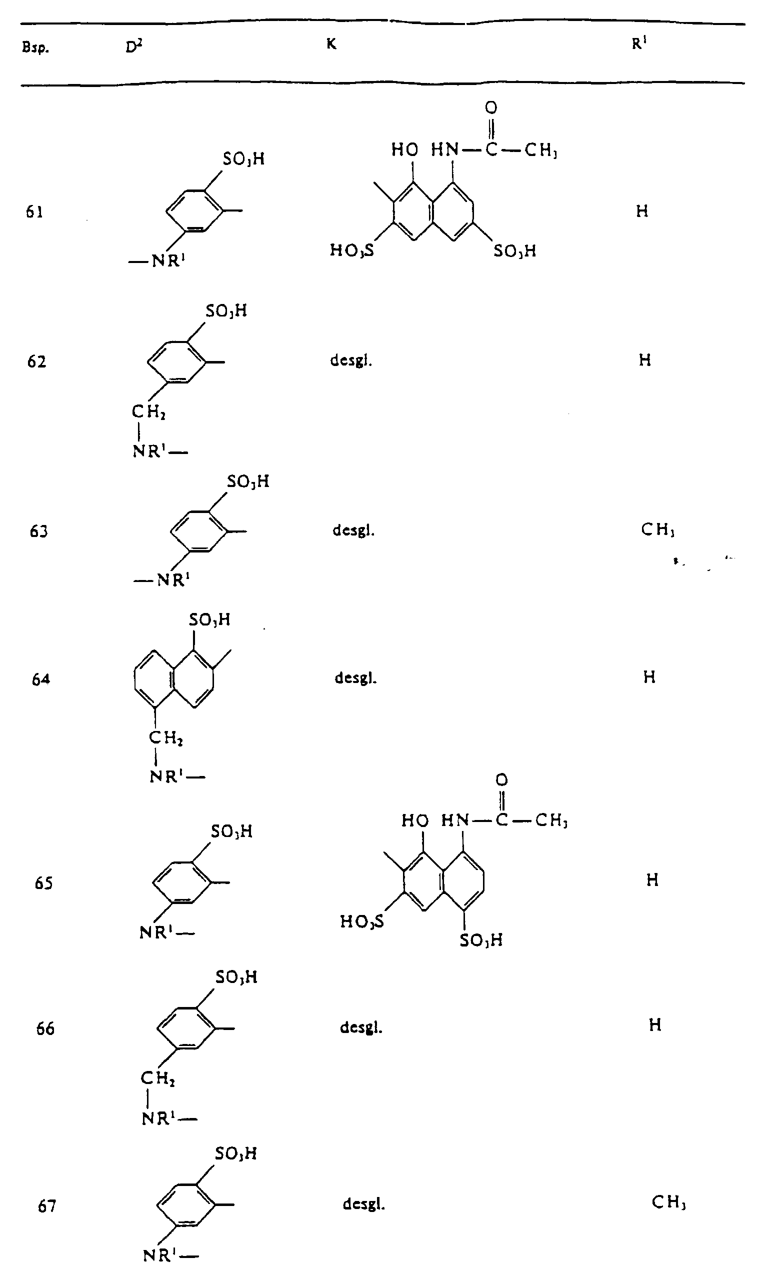

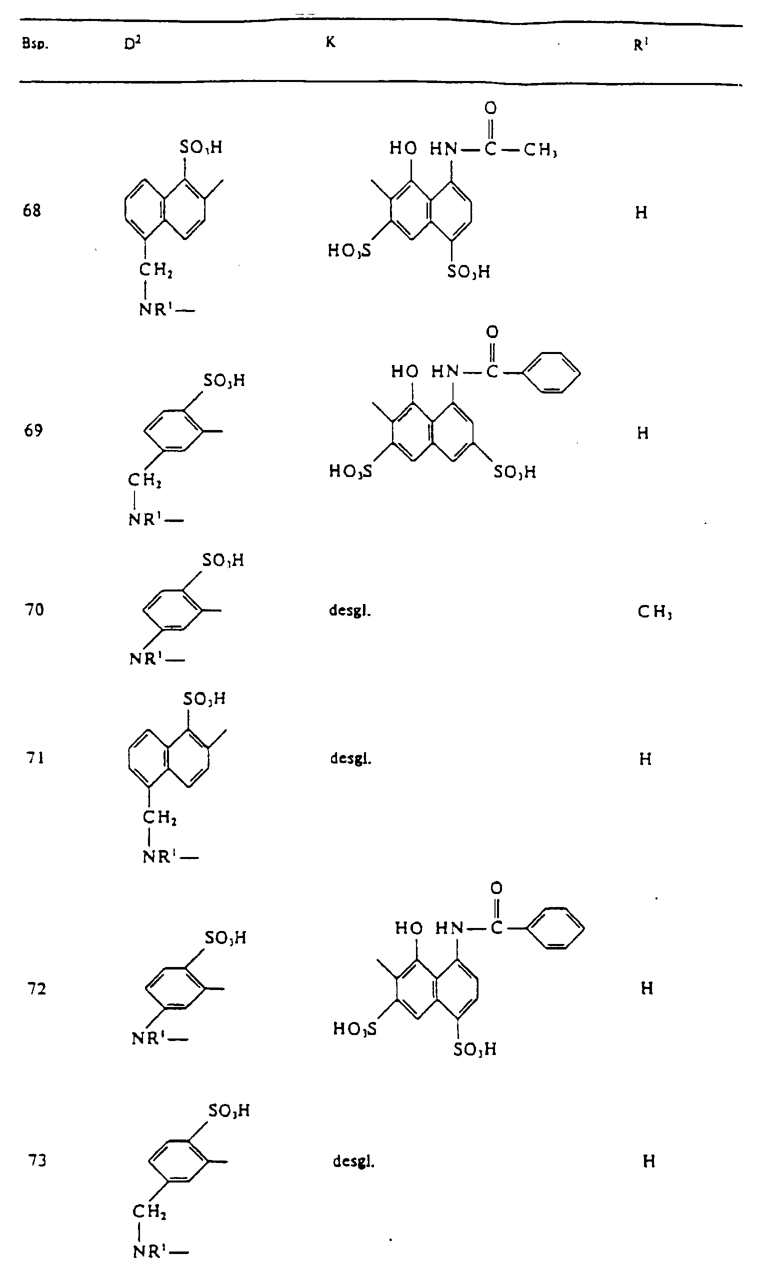

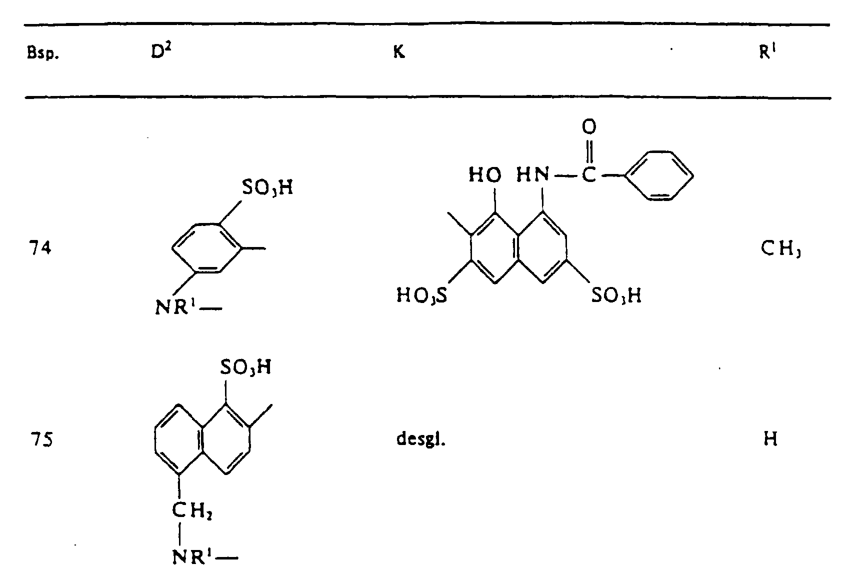

### Beispiele 76 bis 81

In den nachfolgenden Tabellenbeispielen sind weitere erfindungsgemäße Farbstoffmischungen mit Farbstoffen entsprechend der allgemeinen Formel (D)

D - N = N - K¹ - X⁰ (D)

anhand der Komponenten beschrieben, wobei der Rest D der Rest der Diazokomponente ist, der Rest K¹ den Rest einer Kupplungskomponente bedeutet und der Formelrest X⁰ für den einen Farbstoff die Bedeutung von X^{A} und für den anderen Farbstoff die Bedeutung von X^{B} besitzt. Die erfindungsgemäßen Farbstoffmischungen lassen sich in einer der erfindungsgemäßen Verfahrensweisen, beispielsweise analog einem der obigen Ausführungsbeispiele, herstellen und liefern auf den in der Beschreibung genannten Materialien, wie insbesondere Baumwolle, nach den für faserreaktive Farbstoffe üblichen Anwendungsverfahren farbstarke Färbungen und Drucke in roten bis blaustichig roten Farbtönen.

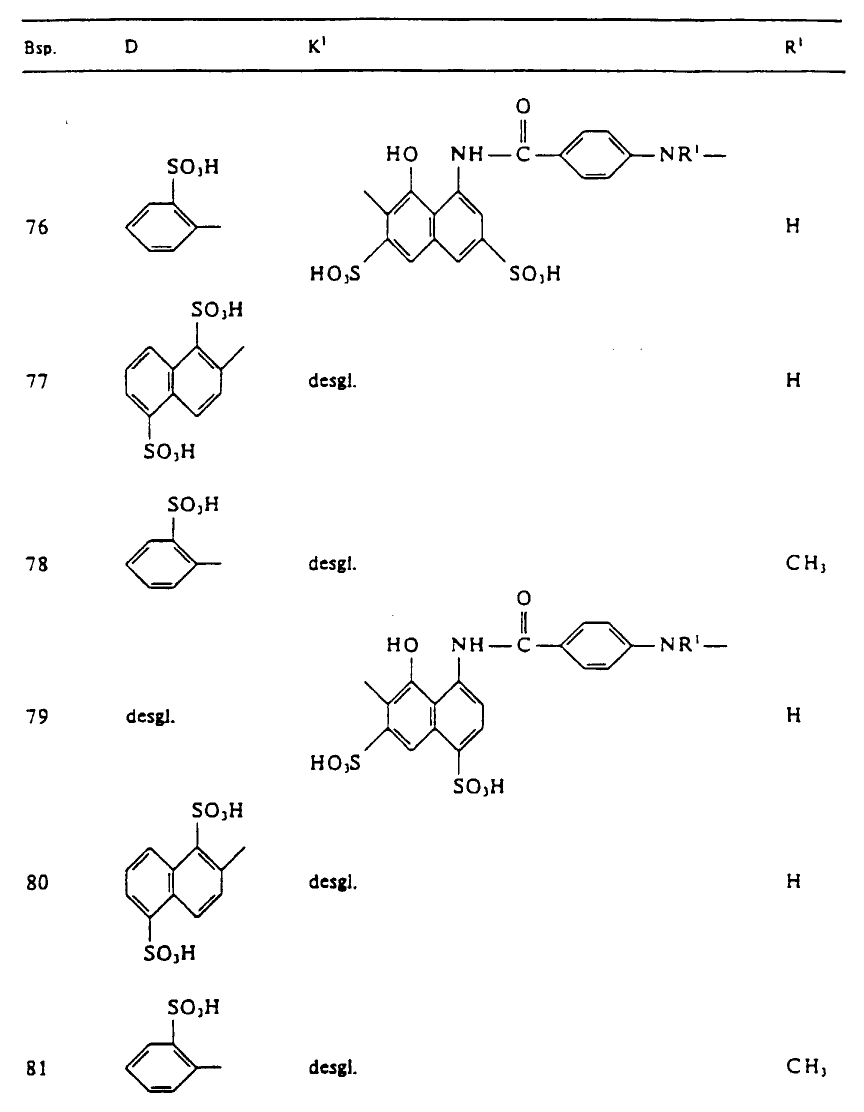

### Beispiel 82

Zur Herstellung einer erfindungsgemäßen Farbstoffmischung verfährt man gemäß den Angaben des Beispieles 60, verwendet jedoch bei der Umsetzung von 1,3-Diaminobenzol-6-sulfonsäure mit 2,4, 6-Trifluorpyrimidin und anschließender Diazotierung die 1,2-fach höheren Mengen und setzt als Kupplungskomponente die Azoverbindung 2-(4'-Sulfophenyl)-azo-3,6-disulfo-8-hydroxy-naphthalin in einer Menge von 82,5 g ein. Man führt die Kupplungsreaktion bei etwa 15°C und einem pH-Wert von 7 bis 8 durch und isoliert die Farbstoffe durch Aussalzen mit etwa 70 g Natriumchlorid.

Die erfindungsgemäße Farbstoffmischung enthält die beiden Farbstoffe der Formel 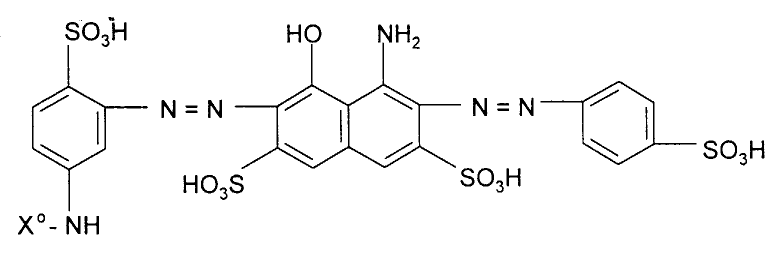 wobei in dem einen Farbstoff der Rest X⁰ den 2,4-Difluor-pyrimidin-6-yl-Rest bedeutet und in dem anderen Farbstoff den 4,6-Difluor-pyrimidin-2-yl-Rest darstellt, die in einem ungefähren molaren Verhältnis von 3,4 : 1 in der Farbstoffmischung enthalten sind. Sie färbt Baumwolle nach den für faserreaktive Farbstoffe üblichen Färbe- und Druckverfahren in marineblauen bis schwarzen Tönen.

### Beispiel 82a

Zur Herstellung der in Beispiel 82 beschriebenen Farbstoffmischung kann man auch so vorgehen, daß man 133 g der Disazoverbindung der Formel (in Form der freien Säure geschrieben) 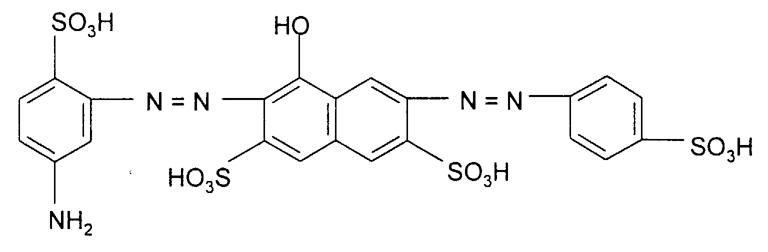 in 750 ml Wasser gelöst bei 50°C und einem pH-Wert von 6 bis 7 mit 24 g 2,4,6-Trifluor-pyrimidin umsetzt und die Farbstoffmischung in der üblichen Weise isoliert.

### Beispiele 83 bis 105

In den nachfolgenden Tabellenbeispielen sind weitere erfindungsgemäße Farbstoffmischungen mit Farbstoffen entsprechend der allgemeinen Formel (F) 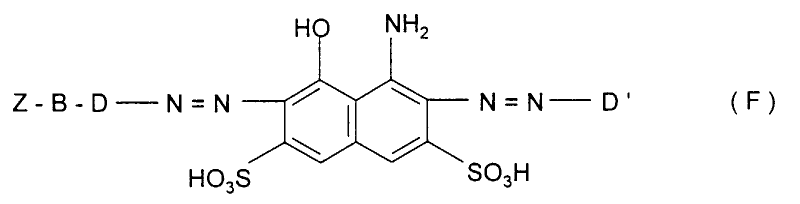 anhand der Komponenten beschrieben, wobei die Gruppe Z in dem einen Farbstoff für den Rest X^{A} steht und für den anderen Farbstoff in dem jeweiligen Tabellenbeispiel die Bedeutung von X^{B} besitzt. Die erfindungsgemäßen Farbstoffmischungen lassen sich in einer der erfindungsgemäßen Verfahrensweisen, beispielsweise analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Färbungen und Drucke in guten Echtheiten in dem in dem jeweiligen Tabellenbeispiel angegebenen Farbton.

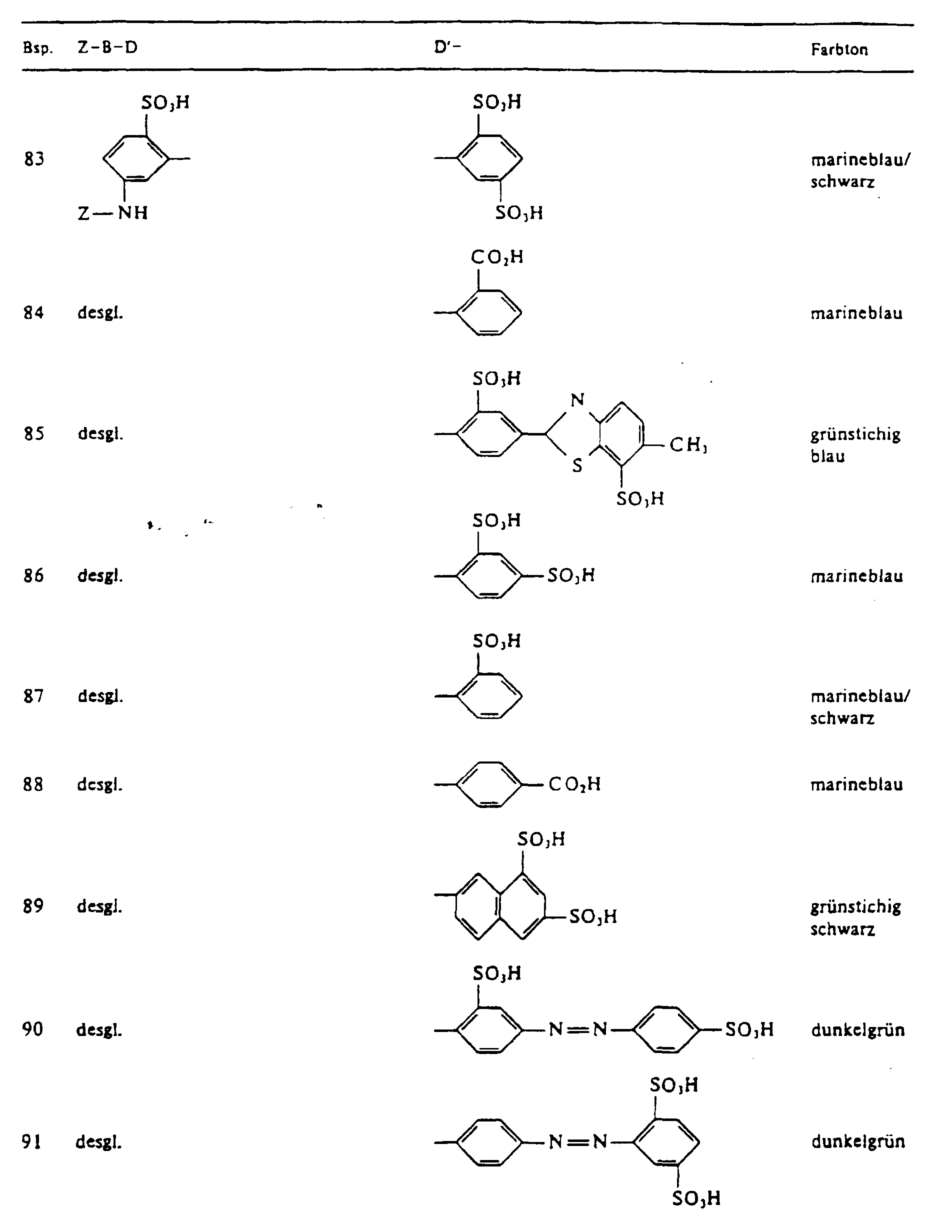

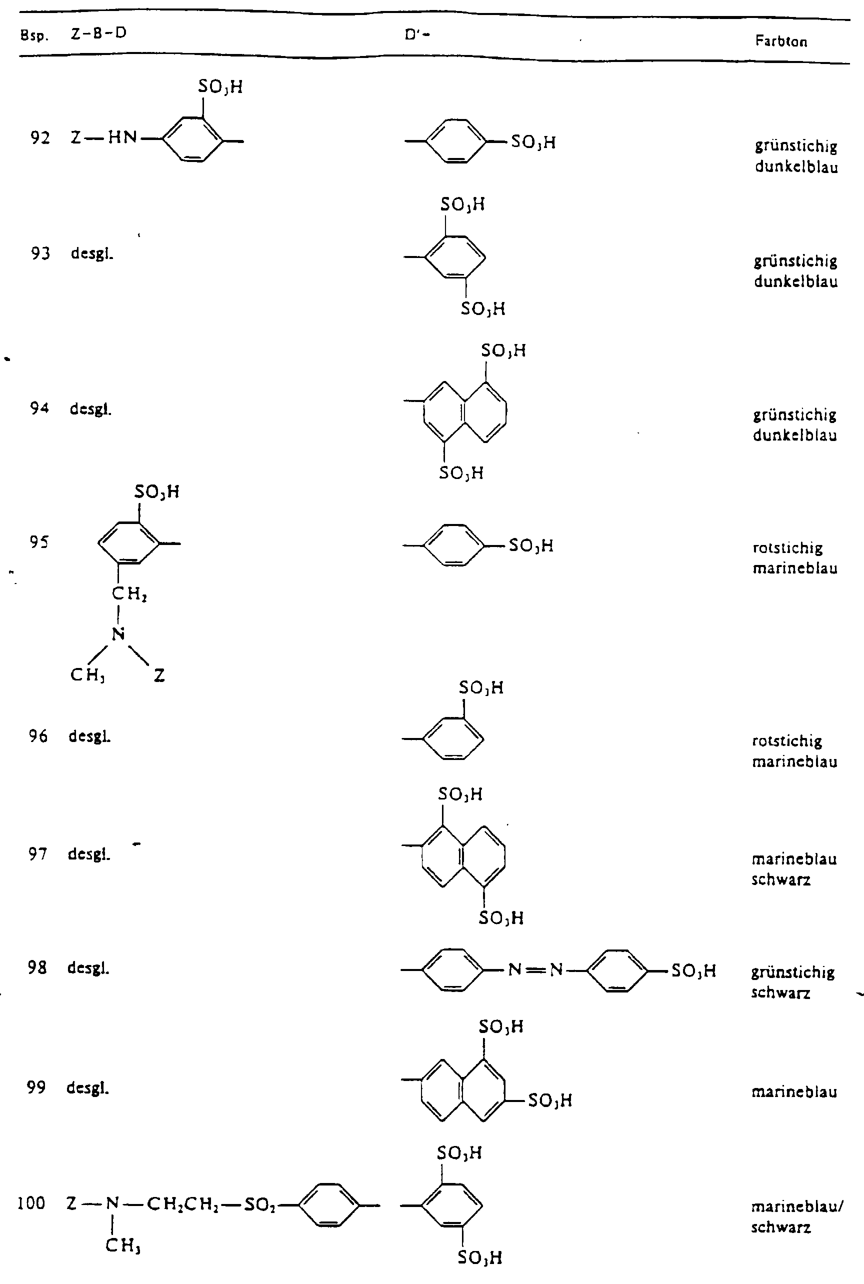

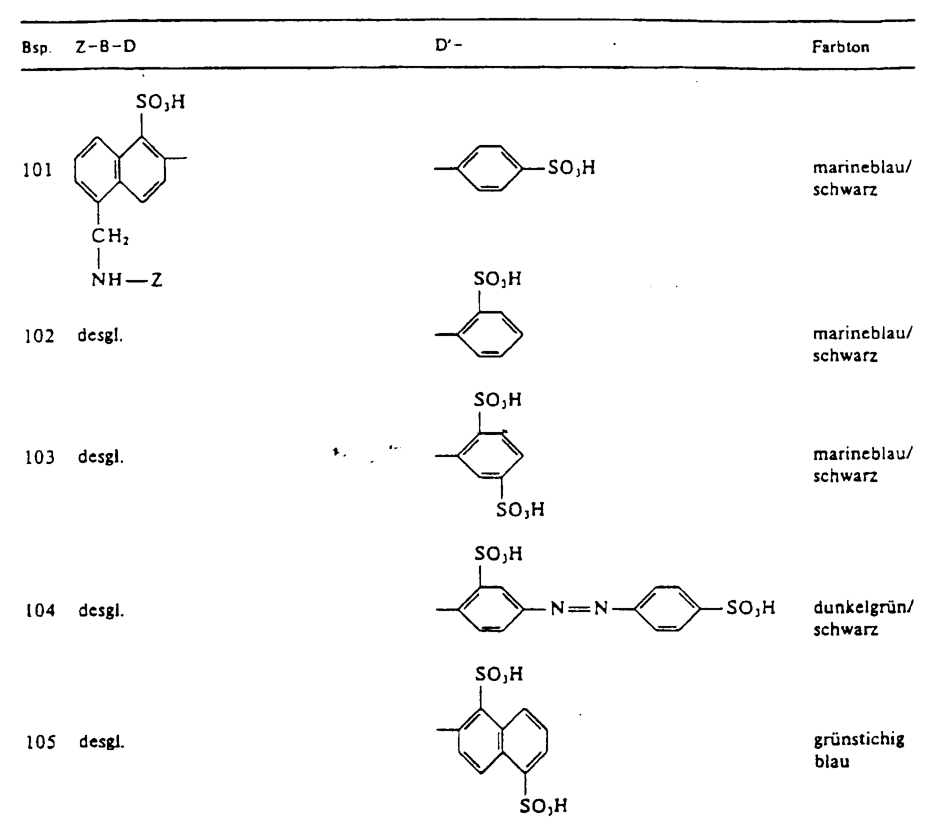

### Beispiel 106

Man setzt zur Herstellung einer erfindungsgemäßen Farbstoffmischung gemäß den Angaben des Beispieles 82 1,3-Diaminobenzol-6-sulfonsäure mit 2,4,6-Trifluorpyrimidin um und diazotiert das erhaltene Produkt. In diesen Reaktionsansatz gibt man unter Rühren eine Lösung von 52,6 g 1-Amino-8-hydroxy-naphthalin-3,6-disulfonsäure als Dinatriumsalz in 250 ml Wasser und führt die Kupplungsreaktion bei einem pH-Wert von 1,5 bis 2,5 und einer Temperatur von 5 bis 10°C während etwa einer Stunde und anschließend nach allmählicher Erhöhung des pH-Wertes auf 3,5 durch Zugabe einer 20 %igen Natriumacetatlösung während etwa drei Stunden bei 10 bis 20°C und dem pH-Wert von 3,5 zu Ende.

Sodann stellt man den pH-Wert des Reaktionsansatzes auf 7,5 und führt die zweite Kupplungsreaktion nach Zugabe eines auf üblichem Wege hergestellten salzsauren wäßrigen Diazoniumsalzslösung aus 47,1 g des Mononatriumsalzes von 2-Amino-naphthalin-1,5-disulfonsäure bei einem pH-Wert von 6,5 bis 8 und einer Temperatur von etwa 15°C durch.

Durch Zugabe von Kaliumchlorid wird anschließend die erfindungsgemäße Mischung der beiden Farbstoffe entsprechend der Formel 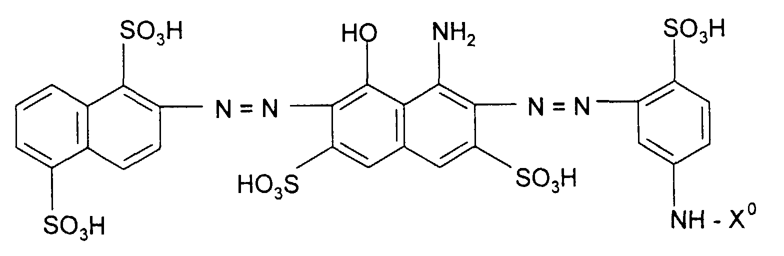 in Form ihrer Alkalimetallsalze isoliert (die Farbstoffe mit X⁰ gleich dem 2,4-Difluor-pyrimidin-6-yl- und dem 4,6-Difluor-pyrimidin-2-yl-Rest liegen in einem molaren Mischungsverhältnis von etwa 3,3 : 1 vor). Die erfindungsgemäße Farbstoffmischung färbt Baumwolle in marineblauen bis schwarzen Tönen.

### Beispiele 107 bis 135

In den nachfolgenden Tabellenbeispielen sind weitere erfindungsgemäße Farbstoffmischungen mit Farbstoffen entsprechend der allgemeinen Formel (G) 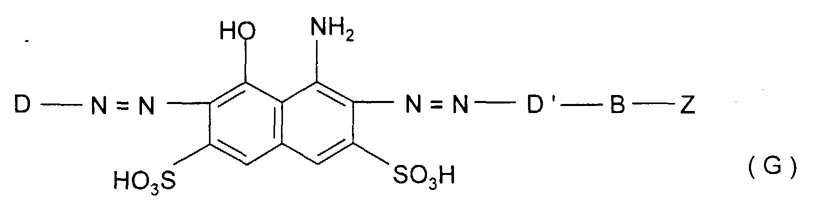 anhand der Komponenten beschrieben, wobei die Gruppe Z in dem einen Farbstoff für den Rest X^{A} steht und für den anderen Farbstoff in dem jeweiligen Tabellenbeispiel die Bedeutung von X^{B} besitzt. Die erfindungsgemäßen Farbstoffmischungen lassen sich in einer der erfindungsgemäßen Verfahrensweisen, beispielsweise analog einem der vorstehenden Ausführungsbeispiele, herstellen und liefern auf den in der Beschreibung genannten Materialien, wie insbesondere Baumwolle, nach den für faserreaktive Farbstoffe üblichen Färbe- und Druckverfahren farbstarke Färbungen und Drucke in guten Echtheiten in dem in dem jeweiligen Tabellenbeispiel angegebenen Farbton.

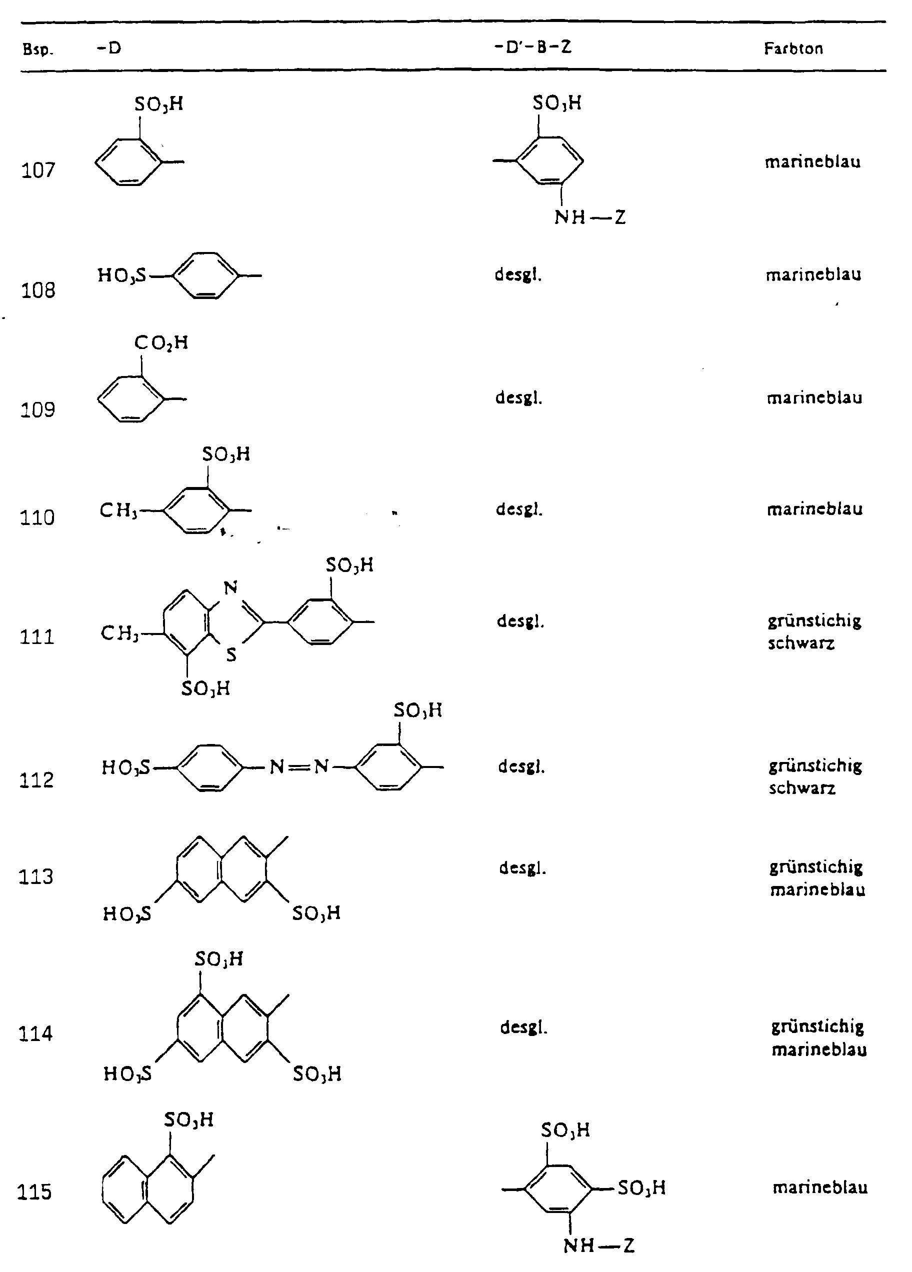

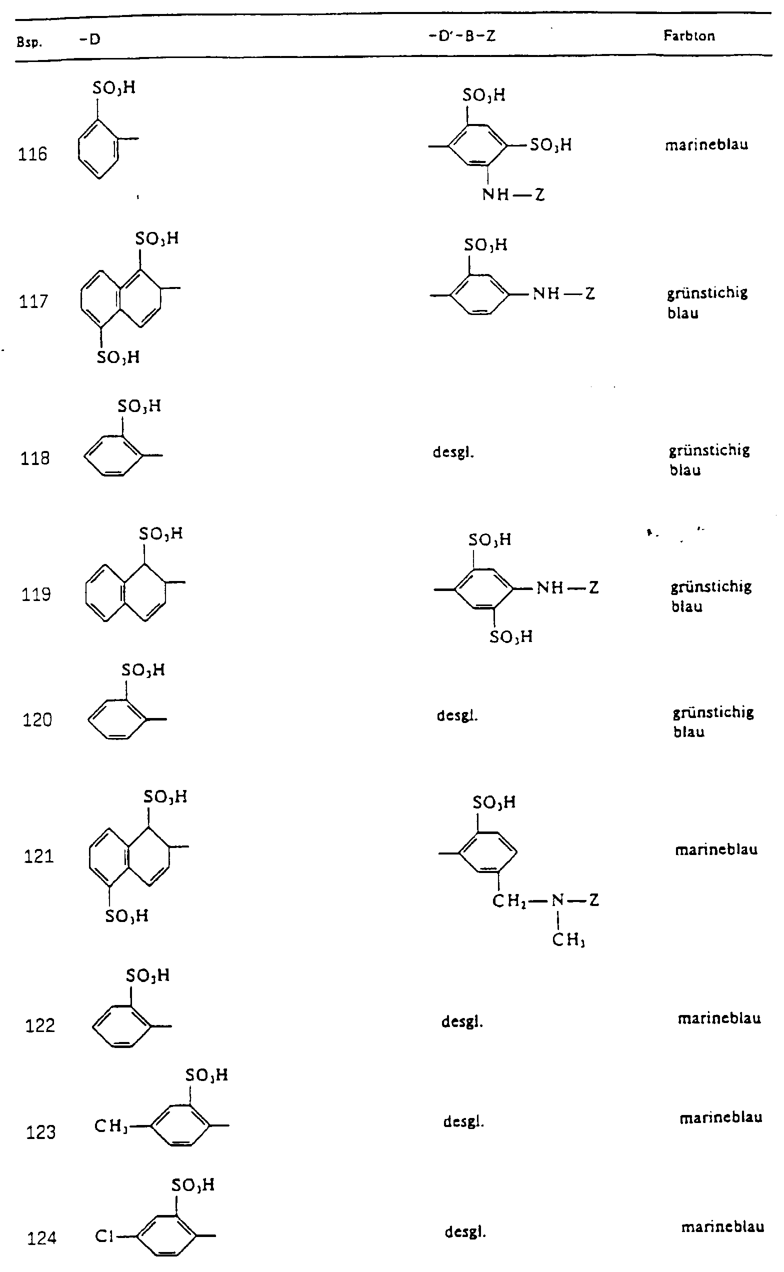

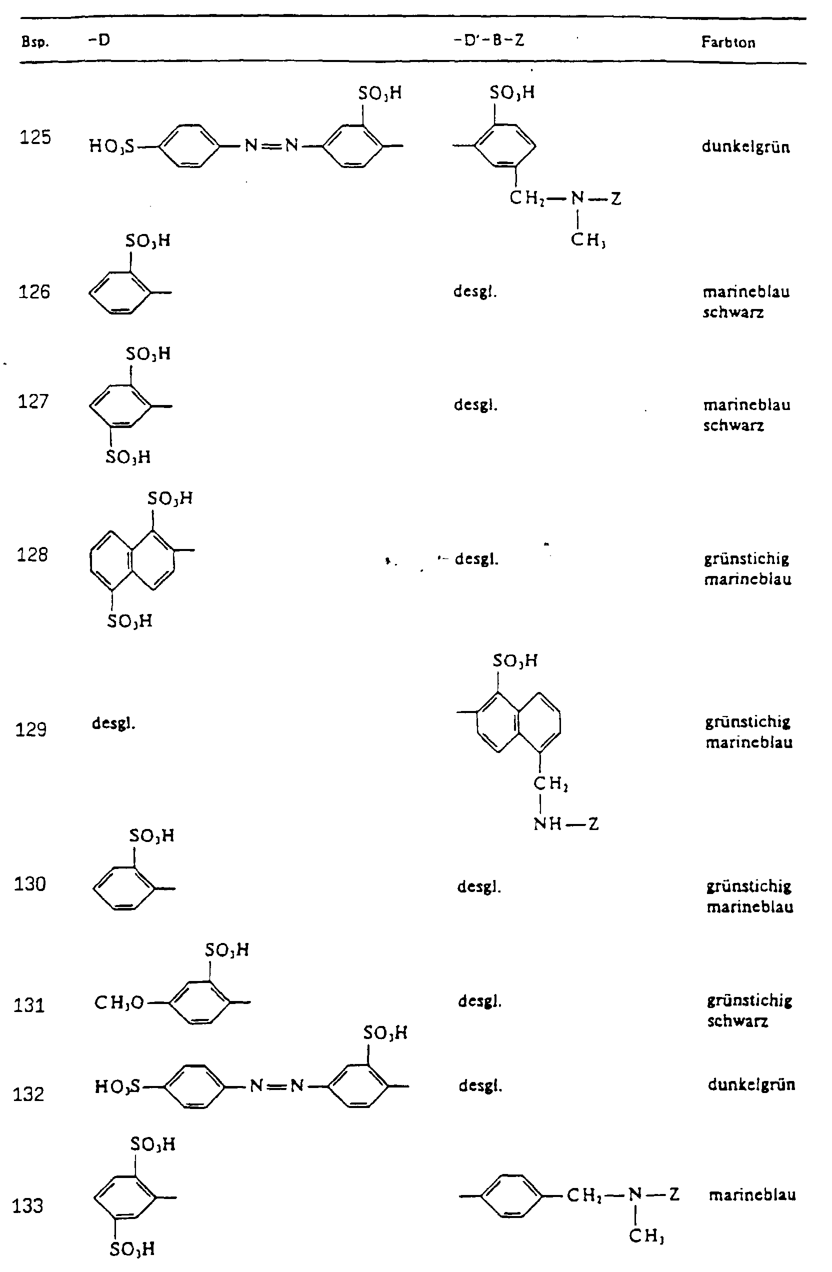

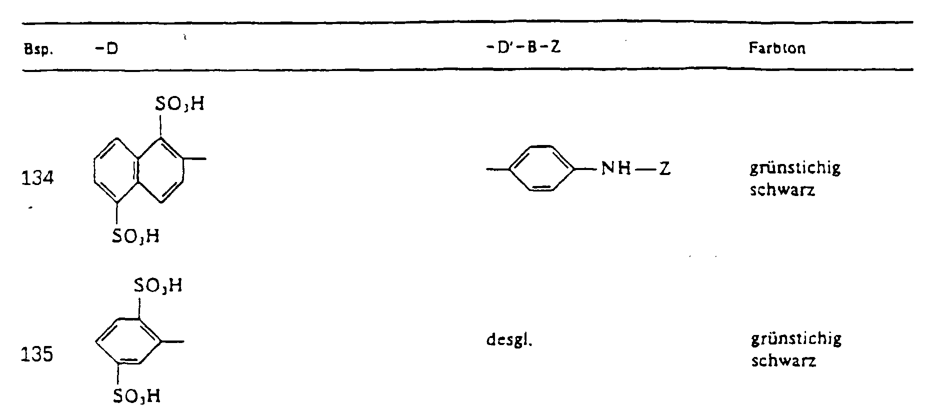

### Beispiel 136

In eine neutrale Lösung von 41,9 g 1-Amino-4-(3'-amino-2'-methyl-5'-sulfophenyl)-amino-anthrachinon in 500 ml Wasser rührt man 15,4 g 2,4,6-Trifluorpyrimidin ein und führt die Umsetzung bei einem pH-Wert von 6 bis 7 und einer Temperatur von 40 bis 50°C durch. Das erhaltene Farbstoffgemisch wird ausgesalzen, abgesaugt und mit 10 %iger Natriumchloridlösung gewaschen.

Die erfindungsgemäße Farbstoffmischung enthält die beiden Farbstoffe der Formel (in Form der freien Säure geschrieben) 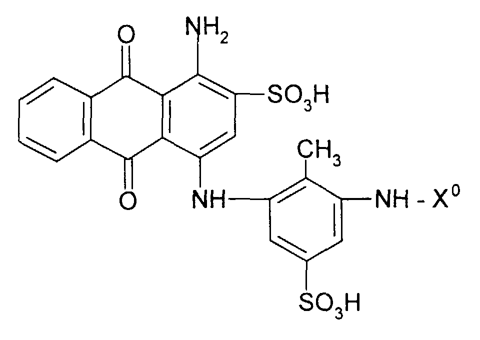 wobei in dem einen Farbstoff der Rest X⁰ den Rest X^{A} bedeutet und dieser in der Mischung mit einem Anteil von etwa 77 % enthalten ist und in dem anderen Farbstoff der Rest X⁰ den Rest X^{B} mit einem Anteil von etwa 23 % darstellt. Die erfindungsgemäße Mischung färbt beispielsweise Baumwolle in neutralen Blautönen.

### Beispiel 137

Zur Herstellung einer erfindungsgemäßen Farbstoffmischung verfährt man gemäß den Angaben des Beispieles 136, setzt jedoch anstelle der dort verwendeten Anthrachinon-Ausgangsverbindung 21 g 1-Amino-4-(3'-amino-4'-sulfo-phenyl)-anthrachinon-2-sulfonsäure ein. Die erhaltene erfindungsgemäße Farbstoffmischung enthält die beiden Farbstoffe der Formel 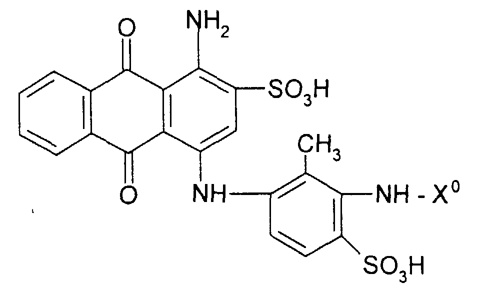 in welcher in dem einen Farbstoff der Rest X⁰ dem 4,6-Difluor-pyrimidin-2-yl-und in dem anderen Farbstoff den 2,4-Difluor-pyrimidin-6-yl-Rest bedeutet, die in der Mischung im molaren Verhältnis von etwa 1 : 3,6 vorliegen. Die erfindungsgemäße Farbstoffmischung liefert beispielsweise auf Baumwolle nach den für faserreaktive Farbstoffe üblichen Anwendungsverfahren blaue Färbungen.

### Beispiele 138 bis 155

Setzt man zur Herstellung einer erfindungsgemäßen Farbstoffmischung jeweils eine in den nachfolgenden Tabellenbeispielen aufgeführte Aminoazo-Ausgangsverbindung analog einem der obigen Ausführungsbeispiele mit 2,4,6-Trifluor-pyrimidin um, so erhält man die beiden Farbstoffe der erfindungsgemäßen Mischung entsprechend der Struktur der in dem jeweiligen Tabellenbeispiel aufgeführten Verbindung, wobei in dem einen Farbstoff die Aminogruppe -NH₂ durch den 4,6-Difluor-pyrimidin-2-yl-amino-Rest und in dem anderen Farbstoff durch den 2,4-Difluor-pyrimidin-6-yl-amino-Rest ersetzt ist.

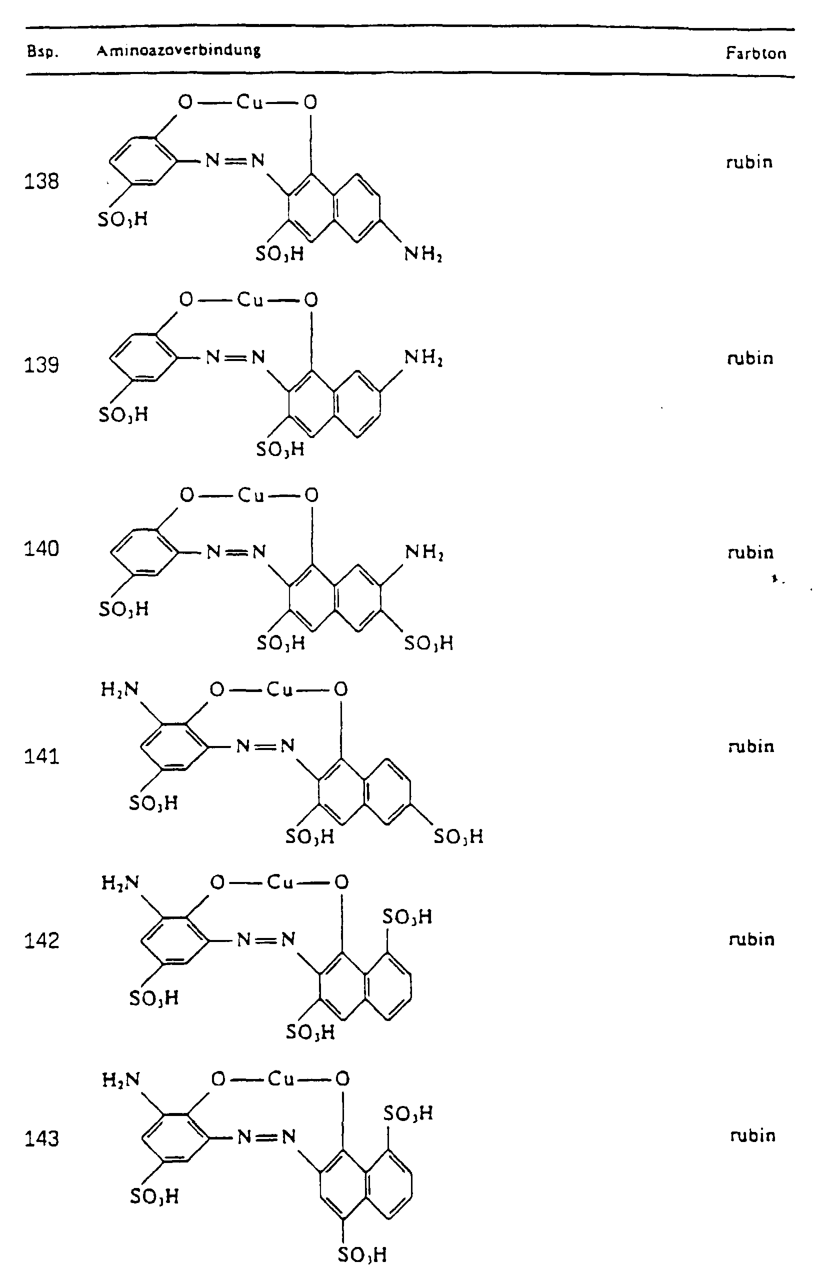

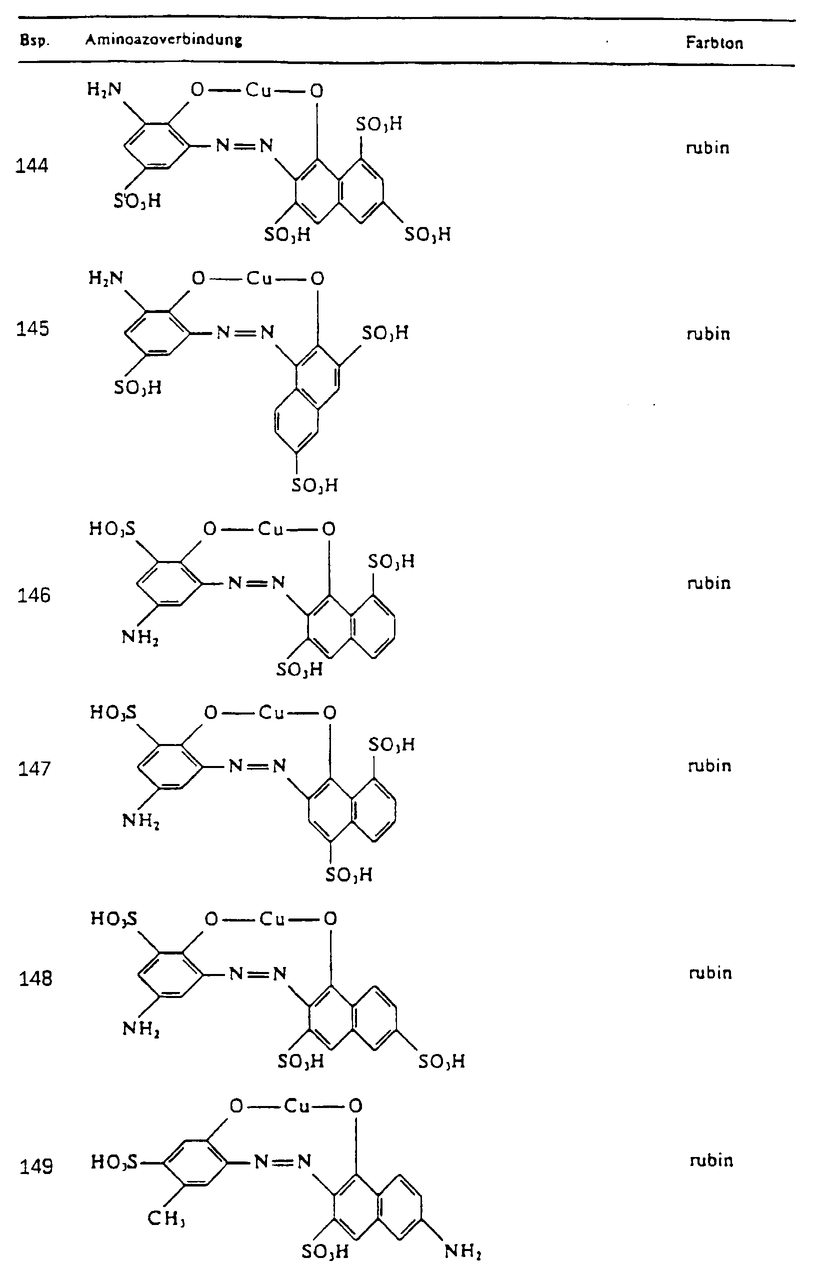

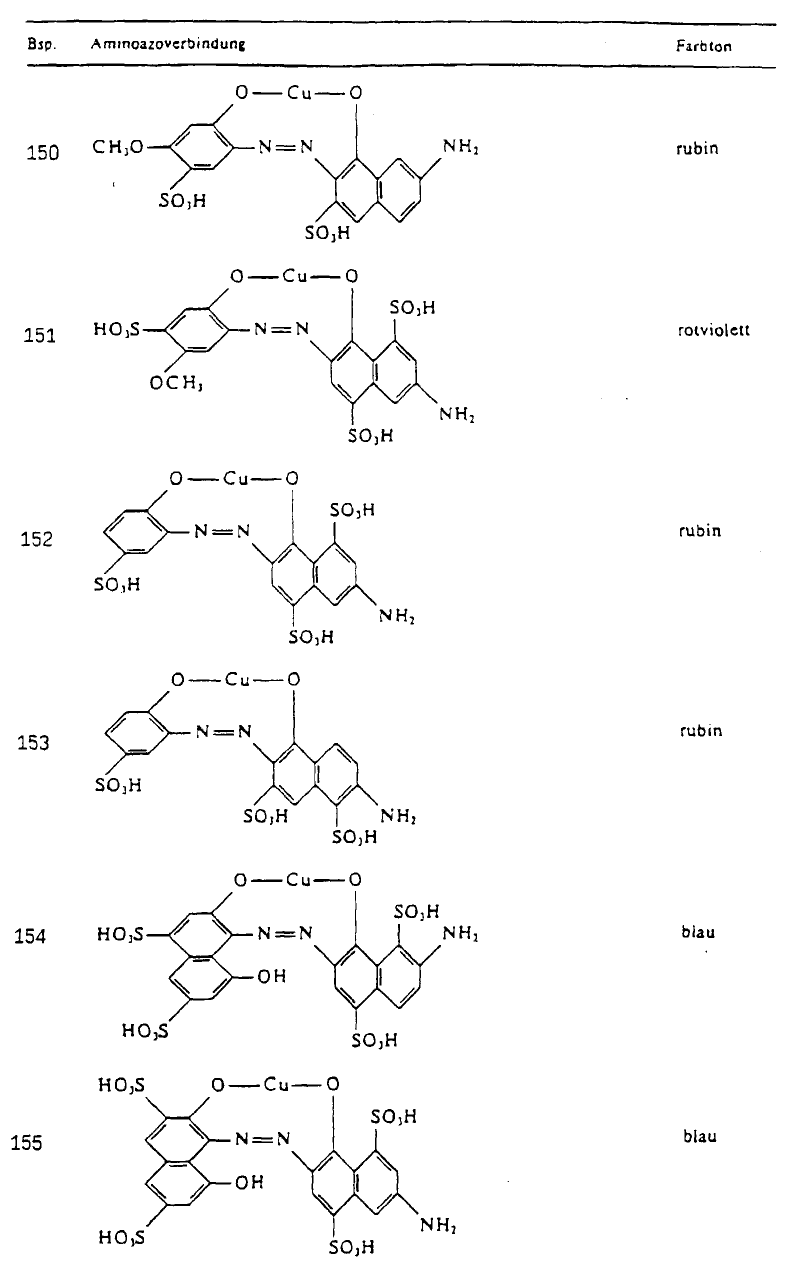

## Patentansprüche

1. Farbstoffmischung von faserreaktiven Farbstoffen, gekennzeichnet durch den Gehalt eines oder mehrerer Farbstoffe der allgemeinen Formel (1A) und eines oder mehrerer Farbstoffe der allgemeinen Formel (1B)
A - X^{A} (1A)
A - X^{B} (1B)
in welcher bedeuten:
X^{A} ist der 2,4-Difluor-pyrimidin-6-yl-Rest;
X^{B} ist der 4,6-Difluor-pyrimidin-2-yl-Rest;
A ist ein chromophorer Rest entsprechend einer der allgemeinen Formeln (2) bis (7) und (12) bis (14) 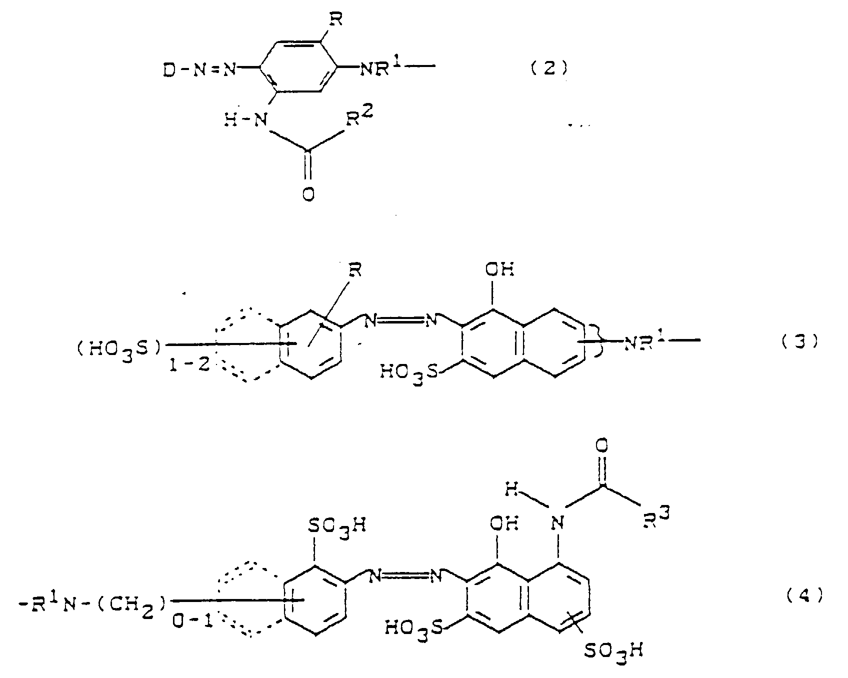 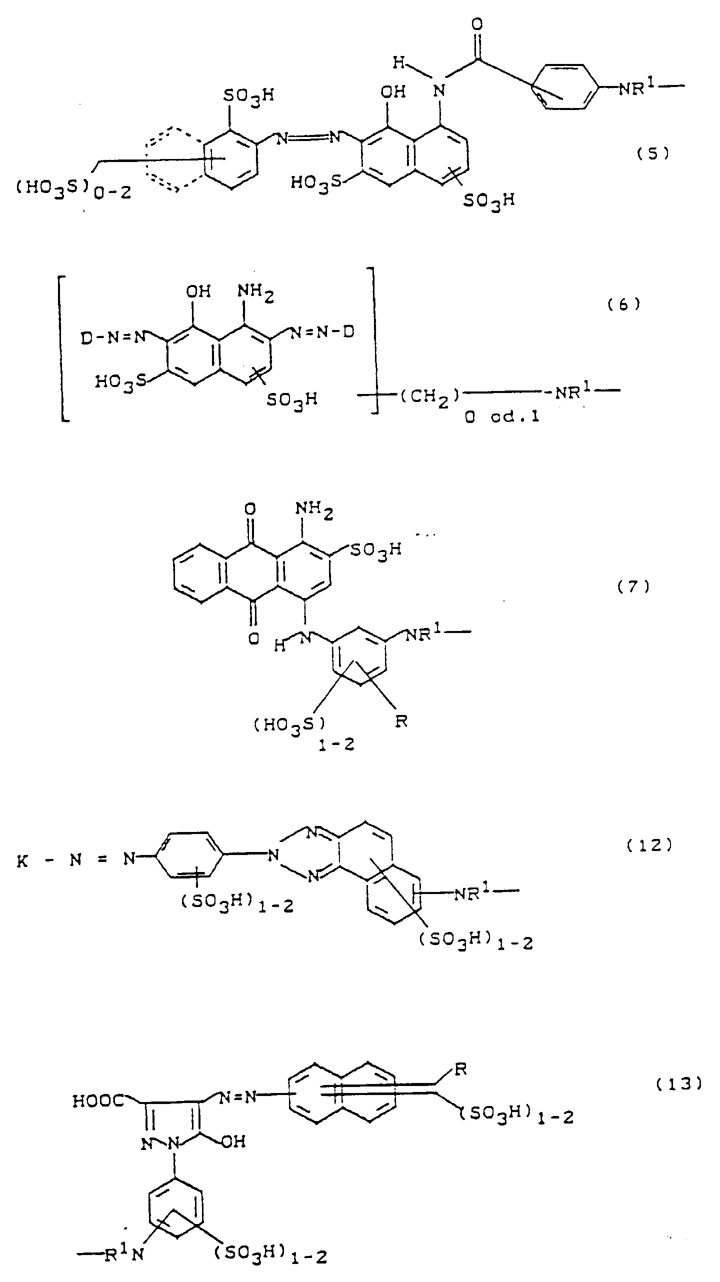 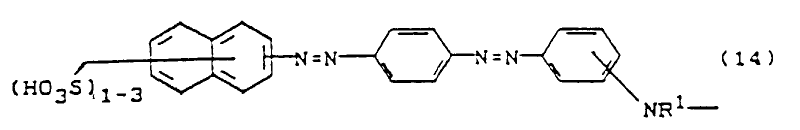
oder
der Metallkomplexe von Farbstoffen der Formeln (8)-(11) 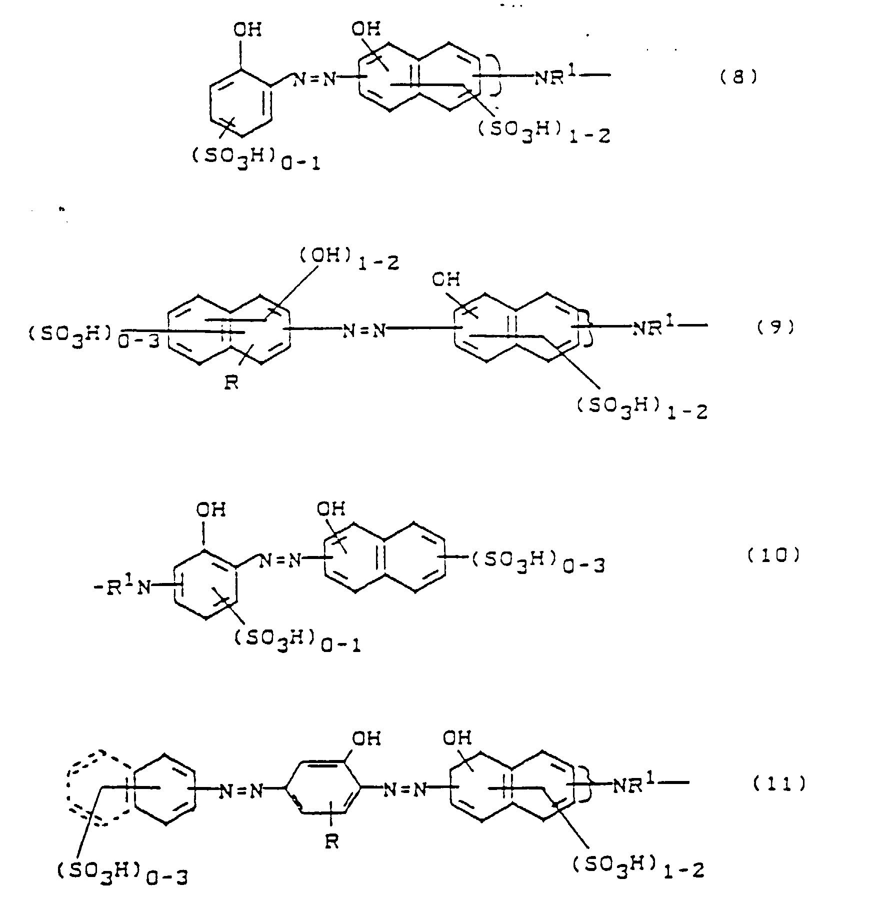 worin
die Bindung zwischen dem chromophoren Rest A und dem 4-Pyrimidinyl-Rest über eine Amino- oder Aminomethylfunktion an ein Ring-C-Atom und A erfolgt,
R = H, C₁-C₆-Alkylrest, C₁-C₆-Alkoxyrest,
R¹ = H, CH₃, C₂H₅,
R² = NH₂, gegebenenfalls durch OH, SO₃H, OSO₃H oder CO₂H substituierter C₁-C₄-Alkylrest, gegebenenfalls durch OH, SO₃H, OSO₃H oder CO₂H substituierter C₁-C₄-Alkoxyrest,
R³ = gegebenenfalls durch OH, SO₃H, OSO₃H oder CO₂H substituierter C₁-C₄-Alkylrest, gegebenenfalls durch C₁-C₄-Allkyl, Halogen oder SO₃H substituierter Phenylrest,
D steht für einen sulfogruppen- oder carboxygruppenhaltigen Rest einer Diazokomponente aus der Benzol-, Naphthalin- oder Hetarylreihe, der zusätzlich mit Alkyl-, Alkoxy-, Carboxy- oder Halogenresten substituiert sein kann, in Formel (6) jedoch weist einer von beiden Resten D einen, möglicherweise substituierten, 2,6-Difluor-4-pyrimidinylamino-, -methylamino- oder -ethylaminoSubstituenten auf- D kann in diesem Fall sulfogruppenfrei oder sulfogruppenhaltig sein,
K steht für eine Kupplungskomponente, bevorzugt für Pyridone, Pyrazolone, Barbitursäure- und Citracinsäurederivate.

2. Farbstoffmischung nach Anspruch 1, dadurch gekennzeichnet, daß in den Formelresten der Rest R gleich Wasserstoff, Methyl, Methoxy oder Ethoxy ist, R¹ Wasserstoff oder Methyl ist, R² Amino oder Alkyl von 1 bis 4 C-Atomen oder durch Hydroxy, Sulfo, Sulfato oder Carboxy substituiertes Alkyl von 1 bis 4 C-Atomen ist und R³ Methyl, Phenyl oder durch Alkyl von 1 bis 4 C-Atomen, Halogen oder Sulfo substituiertes Phenyl ist.

3. Farbstoffmischung nach Anspruch 1, in welcher A ein Rest der allgemeinen Formel (2) ist, worin R gleich Wasserstoff, R¹ gleich Wasserstoff oder Methyl, R² gleich Amino oder Alkyl von 1 bis 4 C-Atomen, das durch Hydroxy, Sulfo, Sulfato oder Carboxy substituiert sein kann, und D gleich Disulfophenyl, 6,8-Disulfo-naphth-2-yl, 3,6,8-Trisulfonaphth-2-yl oder 4,8-Disulfo-naphth-2-yl ist.

4. Farbstoffmischung nach Anspruch 1, dadurch gekennzeichnet, daß A ein Rest der allgemeinen Formel (3) ist, in welcher R gleich Wasserstoff, Methyl oder Methoxy ist und R¹ gleich Wasserstoff oder Methyl ist.

5. Farbstoffmischung nach Anspruch 1, dadurch gekennzeichnet, daß A ein Rest der allgemeinen Formel (4) oder (5) ist, in welchen R¹ Wasserstoff oder Methyl ist und R³ Methyl oder Phenyl ist, das durch Alkyl von 1 bis 4 C-Atomen, Halogen oder Sulfo substituiert sein kann.

6. Farbstoffmischung nach Anspruch 1, dadurch gekennzeichnet, daß A ein Rest allgemeinen Formel (17a) 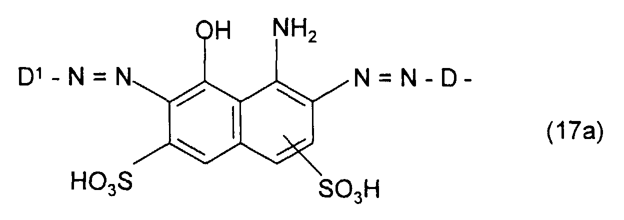 ist, in welcher D ein Rest der allgemeinen Formel (a) 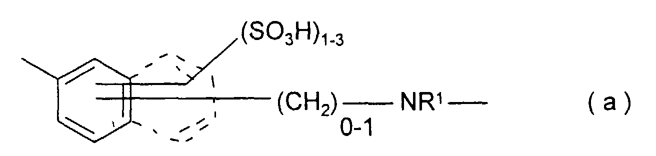 ist, worin R¹ Wasserstoff oder Methyl bedeutet, und D¹ Mono-, Di- oder Trisulfo-phenyl oder Mono-, Di- oder Trisulfo-naphth-2-yl ist.

7. Farbstoffmischung nach Anspruch 1, dadurch gekennzeichnet, daß A ein Rest allgemeinen Formel (17b) 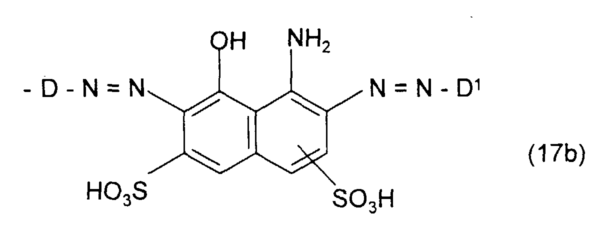 ist, in welcher D ein Rest der allgemeinen Formel (a) 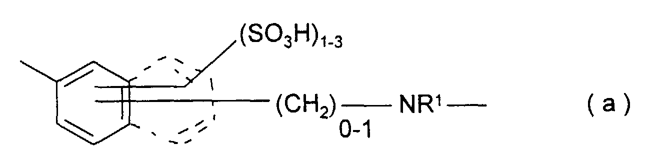 ist, worin R¹ Wasserstoff oder Methyl bedeutet, und D¹ Mono-, Di- oder Trisulfo-phenyl oder Mono-, Di- oder Trisulfo-naphth-2-yl ist.

8. Farbstoffmischung nach Anspruch 1, dadurch gekennzeichnet, daß A ein Rest allgemeinen Formel (18) 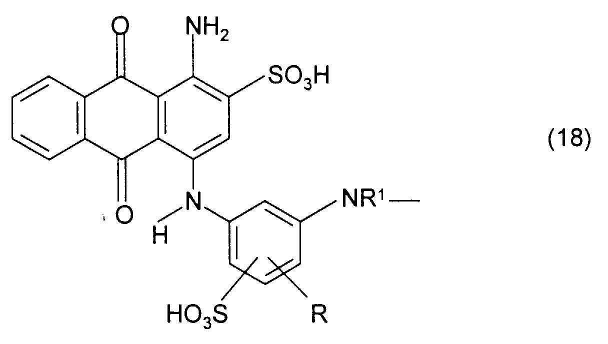 ist, in welcher R Wasserstoff, Methyl oder Methoxy ist und R¹ Wasserstoff ist.

9. Farbstoffmischung nach Anspruch 1, dadurch gekennzeichnet, daß A ein Rest der allgemeinen Formel (8), (9), (10) oder (11) ist, worin R für Wasserstoff steht.

10. Farbstoffmischung nach Anspruch 1, dadurch gekennzeichnet, daß A ein Rest der allgemeinen Formel (12) ist, worin R gleich Wasserstoff bedeutet.

11. Farbstoffmischung nach Anspruch 1, dadurch gekennzeichnet, daß der oder die Farbstoffe der allgemeinen Formel (1A) in einem Anteil von 90 bis 30 Gew.-% und der oder die Farbstoffe der allgemeinen Formel (1B) im einen Anteil von 10 bis 70 Gew-% vorliegen.

12. Verwendung einer Farbstoffmischung nach Anspruch 1 zum Färben von hydroxy- und/oder carbonamidgruppenhaltigem Material, inbesondere Fasermaterial.

13. Verfahren zum Färben von hydroxy- und/oder carbonamidgruppenhaltigem Material, insbesondere Fasermaterial, bei welchem man Farbstoffe auf das Material aufbringt und auf dem Material mittels Wärme oder mit Hilfe eines alkalisch wirkenden Mittels oder mittels beider Maßnahmen fixiert, dadurch gekennzeichnet, daß man als Farbstoffe eine Farbstoffmischung gemäß Anspruch 1 oder Farbstoffe der Formel (1A) und (1B) von Anspruch 1 gemeinsam einsetzt.
